# EUROPEAN PATENT SPECIFICATION

(11) **EP 2 212 812 B1**
(45) Date of publication and mention of the grant of the patent: **10.05.2017**
(21) Application number: 08837344.4
(22) Date of filing: 09.10.2008
(51) Int. Cl.: G06F 17/30, G06F 11/14

(54) **MULTI-WAY CHECKPOINTS IN A DATA STORAGE SYSTEM**
MEHRFACHE SPEICHERABBILDER IN EINEM DATENSPEICHERSYSTEM
POINTS DE CONTRÔLE MULTIVOIE DANS UN SYSTÈME DE STOCKAGE DE DONNÉES

(30) Priority: 12.10.2007 US 979561 P; 16.01.2008 US 15192; 30.06.2008 US 164730
(43) Date of publication of application: 04.08.2010
(73) Proprietor: Hitachi Data Systems Engineering UK Limited, Berkshire RG12 8FZ (GB)
(72) Inventor: ASTON, Christopher, J., Bucks HP14 4LL (GB); BENHAM, Simon, L., Berkshire RG12 2NA (GB); BERRINGTON, Neil, San Jose CA 95112 (US); HOLTOM, John, C., Sunnyvale CA 94086 (US)
(74) Representative: MERH-IP Matias Erny Reichl Hoffmann Patentanwälte PartG mbB
(86) International application number: PCT/US2008/079308
(87) International publication number: WO 2009/049023

(56) References cited:
- WO-A-03/105026
- US-A- 5 819 292
- US-A1- 2003 182 301
- US-A1- 2005 097 141

## Description

### CROSS-REFERENCE TO RELATED APPLICATIONS

This PCT application claims priority from the following United States patent applications:
United States Provisional Patent Application No. 60/979,561 entitled System, Device, and Method for Validating Data Structures in a Storage System, which was filed on October 12, 2007 in the name of John C. Holtom;
United States Patent Application No. 12/015,192 entitled Validating Objects in a Data Storage System, which was filed on January 16, 2008 in the name of Christopher J. Aston; and
United States Patent Application No. 12/164,730 entitled MULTI- WAY CHECKPOINTS IN A DATA STORAGE SYSTEM, which was filed on June 30, 2008 in the names of Christopher J. Aston, Simon L. Benham, and Neil Berrington.

This patent application may also be related to one or more of the following patent applications:
United States Patent Application No. 12/164,745 entitled DYNAMIC WRITE BALANCING IN A DATA STORAGE SYSTEM, filed on June 30, 2008 in the names of Christopher J. Aston, Mark S. Laker, and Trevor E. Willis;
United States Patent Application No. 09/879,798 entitled Apparatus and Method for Hardware Implementation or Acceleration of Operating System Functions, which was filed June 12, 2001, now United States Patent No. 6,826,615; United States Patent Application No. 10/889,158 entitled Apparatus and Method for Hardware Implementation or Acceleration of Operating System Functions, which was filed on July 12, 2004;
United States Patent Application No. 10/286,015 entitled Apparatus and Method for Hardware-Based File System, which was filed on November 1, 2002 in the name of Geoffrey S. Barrall et al.; and
United States Patent Application No. 11/841,353 entitled Apparatus and Method for Hardware-Based File System, which was filed on August 20, 2007 in the name of Geoffrey S. Barrall et al.

### FIELD OF THE INVENTION

The present invention relates to data storage systems, and in particular to multi-way checkpoints and validating objects and data structures in a data storage system.

### BACKGROUND

United States Patent Application No. 10/286,015 entitled Apparatus and Method for Hardware-Based File System filed on November 1, 2002 in the name of Geoffrey S. Barrall et al. and United States Patent Application No. 11./841,353 entitled Apparatus and Method for Hardware-Based File System filed on August 20, 2007 in the name of Geoffrey S. Barrall et al. describe various filesystem structures that permit, among other things, a file server to maintain two copies of a filesystem, namely a current version of the filesystem and a prior "checkpoint" version of the filesystem. Specifically, the filesystem is maintained using tree structures that include a special root node that is actually a pair of structures referred to as the left hand side (LHS) and right hand side (RHS). In practice, one side Is used to hold a "checkpoint" copy of the filesystem while the other side is used for ongoing management of the filesystem (including creation, deletion, and modification of filesystem objects). From time to time, the roles of the two sides reverse so that a "checkpoint" is taken using the side of the structure that was being used for ongoing management of the filesystem and ongoing management of the filesystem continues using the side of the structure that held the previous "checkpoint." Two so-called dynamic superb locks are maintained for keeping track of the current and checkpoint versions of the filesystem.

One purpose of the "checkpoint" is to store a copy of the filesystem in case an error occurs during the ongoing management of the filesystem. Under certain circumstances, the filesystem may be reverted to the "checkpoint" version. One risk in such a system is that both the current version of the filesystem and the "checkpoint" version may become corrupted. Another risk is that an important piece of information will be removed or changed, and neither the current version of the filesystem nor the "checkpoint," version will include the original piece of information.

Certain filesystem metadata data structures are critical to the correct functionality of the filesystem. It is desirable to be able to detect corruption of these structures easily and reliably,

Some level of validation can be provided by embedding validation information such as a CRC in each block of filesystem metadata. However, this only provides validation of the block in isolation. It is possible that a valid block A and a valid block B may combine to form an invalid structure AB.

A more rigorous validator would be one which validated the structure as a whole. One method for achieving this would be to calculate a CRC across the entire structure. However, such a solution has the disadvantage that the entire structure would have to be read (to calculate the new CRC value) whenever any part of the structure changed. Another option would be to keep a checksum of the entire structure. This would allow the new checksum to be calculated without having to read the entire structure, since the checksum of the old data could be removed from the overall checksum and then the checksum of the new data inserted. However, a checksum provides only a weak level of protection for large structures since, for example, two errors may cancel each other out, leaving a correct checksum despite the incorrect contents.

Some prior art systems maintain a list of the CRCs for the files in a storage system (e.g., http://www.dogma.net/markn/articles/crcman/crcman,htm) for the blocks in a file (e.g., http://filerepair.sourceforge.net/).

US 2003/182301 A1 relates to a system and method for managing a plurality of snapshots. A set of metadata describing a file system is contained within the file system so that a snapshot of the file system includes the associated metadata. Backup client file systems are restored to a backup server using conventional dump and restore techniques. The backup server then utilizes a user-defined snapshot management schedule to manage the set of backups associated with the backup server. Such management of snapshots can include deletion of snapshots based upon a variety of parameters including the time stamp.

The documents WO 03/105026 A, US 5,819,292 A and US 2005/097141 A1 relate to aspects of managing snapshots, maintaining consistent states of file systems and file system recovery, respectively.

### SUMMARY OF THE INVENTION

According to the present invention, there is provided a computer program product according to claim 1, an apparatus for managing a file system according to claim 7, and a method for managing a file system according to claim 13, Dependent claims relate to preferred embodiments of the present invention.

The following aspects relate to background of the invention.

A method for maintaining a plurality of checkpoint versions of a filesystem in a data storage system may be provided. The method involves maintaining at least three superb locks in the data storage system, each superb lock representing a version of the filesystem including a working version of the filesystem represented by a designated current superblock and at least two checkpoint versions of the filesystem represented by the other superb locks; maintaining a plurality of indirection objects in the data storage system, wherein each superblock includes a reference to one of the indirection objects such that each indirection object is referenced by at least one of the superb locks; and at a designated checkpoint, retaining a copy of the working version of the filesystem including the indirection object referenced by said designated current superblock as a new checkpoint version using a first designated superblock and continuing to maintain the working version of the filesystem using a second designated superblock, wherein the new checkpoint version supplants an earlier checkpoint version.

There may be provided an apparatus for maintaining a plurality of checkpoint versions of a filesystem. The apparatus includes at least one storage device and a storage processor in communication with the at least one storage device. The storage processor is configured for maintaining at least three superb locks in the data storage system, each superblock representing a version of the filesystem including a working version of the filesystem represented by a designated current superblock and at least two checkpoint versions of the filesystem represented by the other superblocks; maintaining a plurality of indirection objects in the data storage system, wherein each superblock includes a reference to one of the indirection objects such that each indirection object is referenced by at least one of the superblocks; and at a designated checkpoint, retaining a copy of the working version of the filesystem including the indirection object referenced by said designated current superblock as a new checkpoint version using a first designated superblock and continuing to maintain the working version of the filesystem using a second designated superblock, wherein the new checkpoint version supplants an earlier checkpoint version.

In various alternative aspects, the at least three superblocks may be stored at fixed locations within the data storage system.

In one exemplary aspect, said first designated superblock is said designated current superblock and said second designated superblock is a selected one of the other superblocks. The superblocks may be logically arranged as a circular list, in which case said second designated superblock is the next successive superblock in the circular list following said first designated superblock.

In another exemplary aspect, said second designated superblock is said designated current superblock and said first designated superblock is a selected one of the other superblocks.

In another exemplary aspect, continuing to maintain the working version of the filesystem using said second designated superblock may involve initially including in said second designated superblock a reference to the indirection object referenced by said designated current superblock; and upon modification of the indirection object referenced by said designated current superblock, creating a new version of said indirection object and including in said second designated superblock a reference to said new version.

In another exemplary aspect, continuing to maintain the working version of the filesystem using said second designated superblock may involve creating a new version of said indirection object upon retaining the copy of the working filesystem and including in said second designated superblock a reference to said new version. In various alternative aspects, the number of superblocks may be fixed or use- configurable.

In exemplary aspects, a distinct checkpoint number or other identifier may be included in each superblock associated with a checkpoint version of the filesystem.

In exemplary aspects, the indirection objects may be implemented as pseudo- files that map each of a plurality of object numbers to a sector address of a root node associated with a corresponding filesystem object.

Certain aspects may relate to validation of a data structure comprising a table having a sequence of table entries, each table entry including a type field and a pointer field, the type field indicating whether the table entry is used or free, the pointer field including a reference to a next free table entry if the table entry is free such that the data structure includes a list of free table entries linked using pointer fields.

There may be provided a method for validating such a data structure in a storage system. The method involves (a) maintaining a tracking structure in a memory, the tracking structure including a corresponding status field for each table entry, the status fields having an unmarked state and a marked state; (b) processing the table entries sequentially and tracking the used and free table entries using the tracking structure, such tracking including marking the status fields corresponding to used table entries and marking the status fields corresponding to the next free table entries referenced in the pointer fields of free table entries; and (c) determining validity of the data structure based on the tracking structure.

There may be provided an apparatus that provides for validation of a data structure in a storage system. The apparatus includes table entry processing logic configured to process the table entries sequentially and track the used and free table entries using a tracking structure, the tracking structure including a corresponding status field for each table entry, the status fields having an unmarked state and a marked state, such processing and tracking including marking the status fields corresponding to used table entries and marking the status fields corresponding to the next free table entries referenced in the pointer fields of free table entries; and validation logic configured to determine validity of the data structure based on the tracking structure.

There may be provided a system that provides for validation of a data structure. The system includes a memory in which a tracking structure is maintained, the tracking structure including a corresponding status field for each table entry, the status fields having an unmarked state and a marked state; and a validator configured to process the table entries sequentially and track the used and free table entries using the tracking structure, such processing and tracking including marking the status fields corresponding to used table entries and marking the status fields corresponding to the next free table entries referenced in the pointer fields of free table entries, the validator further configured to determine validity of the data structure based on the tracking structure.

In various aspects, the tracking structure may be a bitmap, an array, a table, or another appropriate tracking structure.. Processing each table entry may involve determining whether the table entry is used or free based on the type field; if the table entry is used and the corresponding status field in the tracking structure is marked, outputting an error indication indicating that the data structure is corrupted; if the table entry is used and the corresponding status field in the tracking structure is unmarked, marking such status field in the tracking structure; if the table entry is free and the status field corresponding to the next free table entry referenced in the pointer field of the table entry is marked, outputting an error indication indicating that the data structure is corrupted; and if the table entry is free and the status field corresponding to the next free table entry referenced in the pointer field of the table entry is unmarked, marking such status field in the tracking structure. After the table entries have been sequentially processed, an error indication may be output if the tracking structure includes any erroneous unmarked status entries. The list of free table entries may be non-circular or circular. The data structure may include a plurality of free table entries lists. The data structure may be a filesystem indirection object.

In certain aspects, objects stored in the storage system (such as a file server system) are protected by multiple levels of validation. Each chunk of an object is associated with a chunk validator, and an object validator is computed for the object based on the chunk validators, specifically by combining the chunk validators using a reversible operation such as addition, multiplication, or bitwise exclusive-OR, to name but a few. The object validator is stored in the storage system and may be used at various times to validate the object, for example, upon a startup of the storage system, upon taking a checkpoint or "snapshot" of the status of the storage system, or at other appropriate times.

In accordance with one aspect there may be provided a method of providing for validation of an object having a plurality of object chunks stored in a storage system, where each object is associated with an object validator. The method involves computing an object validator for the object using a reversible operation to combine the chunk validators, whereby the object validator can be updated based on at least one of an old chunk validator and a new chunk validator for a single chunk; and storing the object validator for the object.

In accordance with another aspect there may be provided an apparatus for providing for validation of an object having a plurality of object chunks stored in a storage system, where each object is associated with an object validator. The apparatus includes a storage system configured to store objects; and a validation system configured to compute an object validator for the object using a reversible operation to combine the chunk validators and store the object validator, whereby the object validator can be updated based on at least one of an old chunk validator and a new chunk validator for a single chunk.

In various aspects, the chunk validators may be computed using a checksum, a cyclic redundancy check, an exclusive-OR, a hash, and/or an error correction code, to name but a few, The reversible operation may include addition, multiplication, bitwise exclusive-OR, to name but a few. In one particular aspect, the chunk validators may be 32-bit cyclic redundancy checks and the object validator may be a 64-bit sum of the 32-bit cyclic redundancy checks.

An object may be validated by validating each object chunk using its respective stored chunk validator; computing a verification object validator using the chunk validators; and comparing the verification object validator with the stored object validator to determine validity of the object.

The object validator for an object may be updated when a new chunk is added to the object, when an old chunk is removed from the object, or when a chunk is modified. When a new chunk is added to the object, the object validator may be updated by computing and storing a new chunk validator for the new chunk; computing a new object validator for the object using the stored object validator and the new chunk validator (e.g., by adding the new chunk validator to the stored object validator); and storing the new object validator for the object. When an old chunk is removed from the object, the object validator may be updated by computing a new object validator for the object using the stored object validator and the old chunk validator associated with the removed chunk (e.g., by subtracting the old chunk validator from the stored object validator); and storing the new object validator for the object. When a chunk is modified, the object validator may be updated by computing and storing a new chunk validator for the modified chunk; computing a new object validator for the object using the stored object validator, the new chunk validator, and an old chunk validator stored for the chunk (e.g., by subtracting the old chunk validator from the stored object validator and adding the new chunk validator to the stored object validator); and storing the new object validator for the object.

Object validators may be stored in various ways within the storage system such as, for example, within the objects themselves, within a storage system root node structure (e.g., a dynamic superblock of a filesystem in which the object is stored), and/or within an indirection object associated with the object, to name but a few.

### BRIEF DESCRIPTION OF THE DRAWINGS

The foregoing features of the invention will be more readily understood by reference to the following detailed description, taken with reference to the accompanying drawings, in which:
FIG. 1 is a schematic block diagram of a file storage system in accordance with an exemplary embodiment of the present invention;
FIG. 2 is a schematic block diagram showing the general format of a filesystem in accordance with an exemplary embodiment of the present invention;
FIG. 3 is a schematic block diagram showing the general format of an object tree structure in accordance with an exemplary embodiment of the present invention;
FIG. 4 is a block diagram showing use of a root onode with no other onodes in accordance with an exemplary embodiment of the present invention;
FIG. 5 is a block diagram showing showing employment of a root onode with a direct onode in accordance with an exemplary embodiment of the present invention;
FIG. 6 is a block diagram showing showing employment of a root onode with an indirect onode as well as direct onodes in accordance with an exemplary embodiment of the present invention;
FIG. 7 is a block diagram illustrating use of multiple layers of indirect onodes placed between the root onode and the direct onodes in accordance with an exemplary embodiment of the present invention;
FIG. 8 shows a representation of object number assignments for an exemplary embodiment of the present invention;
FIG. 9 is a schematic block diagram showing the general format of the indirection object in accordance with an exemplary embodiment of the present invention;
FIG. 10 is a schematic block diagram demonstrating the general relationship between the DSB, the indirection object, the root direction object, and the file objects, in accordance with an exemplary embodiment of the present invention;
FIG. 11 is a schematic diagram that shows the structure of an exemplary object that includes four data blocks and various onodes at a checkpoint number 1 in accordance with an exemplary embodiment of the present invention;
FIG. 12 is a schematic diagram that shows the structure of the exemplary object of FIG. 11 after a new root node is created for the modified object in accordance with an embodiment of the present invention;
FIG. 13 is a schematic diagram that shows the structure of the exemplary object of FIG. 12 after a modified copy of a data block is created in accordance with an embodiment of the present invention;
FIG. 14 is a schematic diagram that shows the structure of the exemplary object of FIG. 13 after a new direct onode is created to point to the modified copy of the data block in accordance with an embodiment of the present invention;
FIG. 15 is a schematic diagram that shows the structure of the exemplary object of FIG. 14 after a new indirect onode is created to point to the new direct onode in accordance with an embodiment of the present invention;
FIG. 16 is a schematic diagram that shows the structure of the exemplary object of FIG. 15 after the new root node is updated to point to the new indirect onode in accordance with an embodiment of the present invention;
FIG. 17 is a schematic diagram showing various filesystem structures prior to the taking of a checkpoint, in accordance with an exemplary embodiment of the present invention using a circular list of DSBs to record checkpoints;
FIG. 18 is a schematic diagram showing the various filesystem structures of FIG. 17 after a checkpoint is taken, in accordance with an exemplary embodiment of the present invention using a circular list of DSBs to record checkpoints;
FIG. 19 is a schematic diagram showing the various filesystem structures of FIG. 18 after modification of the indirection object, in accordance with an exemplary embodiment of the present invention using a circular list of DSBs to record checkpoints;
FIG. 20 is a schematic diagram showing various filesystem structures prior to the taking of a checkpoint, in accordance with an exemplary embodiment of the present invention in which one DSB is reused to create successive checkpoints;
FIG. 21 is a schematic diagram showing the various filesystem structures of FIG. 20 after a checkpoint is taken, in accordance with an exemplary embodiment of the present invention in which one DSB is reused to create successive checkpoints;
FIG. 22 is a schematic diagram showing the various filesystem structures of FIG. 21 after modification of the indirection object, in accordance with an exemplary embodiment of the present invention in which one DSB is reused to create successive checkpoints;
FIG. 23 is a schematic block diagram showing the relationship between the DSB and the indirection object in accordance with an exemplary embodiment of the present invention;
FIG. 24 is a logic flow diagram showing exemplary high-level pseudo-code for validating the indirection object in accordance with an exemplary embodiment of the present invention;
FIG. 25 is a schematic block diagram for a data structure validation system in accordance with an exemplary embodiment of the present invention;
FIG. 26 is a flowchart showing the process of storing an object in a data storage system;
FIG. 27 is a flowchart showing the process of storing an object in a data storage system, according to a specific embodiment of the present invention;
FIG. 28 is a flowchart showing the process of checking the validity of an object stored in a data storage system;
FIG. 29 is a flowchart showing the process of checking the validity of an object stored in a data storage system, according to a specific embodiment of the present invention;
FIG. 30 is a flowchart showing the process of modifying an object stored in a data storage system;
FIG. 31 is a flowchart showing the process of modifying an object stored in a data storage system, according to a specific embodiment of the present invention;
FIG. 32 is a diagram showing the process of computing an object validator, according to a specific embodiment of the present invention;
FIG. 33 is a diagram showing how an object validator is stored, according to a specific embodiment of the present invention;
FIG. 34 is a diagram showing the structure of an exemplary filesystem that could be employed, according to a specific embodiment of the present invention;
FIG. 35 is a diagram showing how object validators for specific filesystem components are stored, according to a specific embodiment of the present invention; and
FIG. 36 is a diagram showing how object validators for specific filesystem components are stored, according to a specific embodiment of the present invention.

### DETAILED DESCRIPTION OF SPECIFIC EMBODIMENTS

As used in this description and the accompanying claims, the following terms shall have the meanings indicated, unless the context otherwise requires:
A "storage device" is a device or system that is used to store data. A storage device may include one or more magnetic or magneto-optical or optical disk drives, solid state storage devices, or magnetic tapes. For convenience, a storage device is sometimes referred to as a "disk" or a "hard disk." A data storage system may include the same or different types of storage devices having the same or different storage capacities.

A "RAID controller" is a device or system that combines the storage capacity of several storage devices into a virtual piece of storage space that may be referred to alternatively as a "system drive" ("SD"), a "logical unit" ("LU" or "LUN"), or a "volume." Typically, an SD is larger than a single storage device, drawing space from several storage devices, and includes redundant information so that it can withstand the failure of a certain number of disks without data loss. In exemplary embodiments, each SD is associated with a unique identifier that is referred to hereinafter as a "logical unit identifier" or "LUID," and each SD will be no larger than a predetermined maximum size, e.g., 2 TB - 64 TB or more. When commands are sent to an SD, the RAID controller typically forwards the commands to all storage devices of the SD at the same time. The RAID controller helps to overcome three of the main limitations of typical storage devices, namely that the storage devices are typically the slowest components of the storage system, they are typically the most likely to suffer catastrophic failure, and they typically have relatively small storage capacity.

A "RAID system" is a device or system that includes one or more RAID controllers and a number of storage devices. Typically, a RAID system will contain two RAID controllers (so that one can keep working if the other fails, and also to share the load while both are healthy) and a few dozen storage devices. In exemplary embodiments, the RAID system is typically configured with between two and thirty-two SDs. When a file server needs to store or retrieve data, it sends commands to the RAID controllers of the RAID system, which in turn are responsible for routing commands onwards to individual storage devices and storing or retrieving the data as necessary. With some RAID systems, mirror relationships can be established between SDs such that data written to one SD (referred to as the "primary SD") is automatically written by the RAID system to another SD (referred to herein as the "secondary SD" or "mirror SD") for redundancy purposes. The secondary SD may be managed by the same RAID system as the primary SD or by a different local or remote RAID system. Mirroring SDs effectively provides RAID 1+0 functionality across SDs in order to provide recovery from the loss or corruption of an SD or possibly even multiple SDs in some situations.

A "filesystem" is a structure of files and directories (folders) stored in a file storage system. Within a file storage system, filesystems are typically managed using a number of virtual storage constructs, and in exemplary embodiments, filesystems are managed using a hierarchy of virtual storage constructs referred to as ranges, stripesets, and spans. A "range" is composed of either a primary SD on its own or a primary/secondary SD pair that are supposed to contain identical data and therefore offer the same storage capacity as a single SD. A "stripeset" is composed of one or more ranges. A "span" is composed of one or more stripesets. Thus, a span is ultimately composed of one or more SDs (typically four to fifty SDs). A span can be divided into one or more filesystems, with each filesystem having a separate name and identifier and potentially different characteristics (e.g., one filesystem may be formatted with 32KB clusters and another with 4KB clusters, one filesystem may be Worm and another not, etc.). Each filesystem on the span is formatted, mounted, and unmounted separately. Filesystems may be created and deleted in any order and at any time. Filesystems can be configured to expand automatically (or alternatively to prevent or restrict auto-expansion) or can be expanded manually.

An "object" is a unit of information stored in a data storage system. In the context of a filesystem, objects may include system objects (e.g., a root directory object, a free block bitmap object) as well as file objects (e.g., user file objects). An object may be implemented using a tree structure having a root node that points to various other structures, such as storage blocks that contain content, direct nodes that point to storage blocks, or indirect nodes that point to other indirect nodes or to direct nodes. Ultimately, objects are stored in one or more storage devices, such as disk drives.

A "chunk" is a portion of an object that is stored in one or more storage devices. An object is typically composed of a plurality of chunks. A chunk may, but is not required to, coincide with a storage block of a block storage device. An object may include chunks having different sizes, storage locations, and other characteristics.

A "set" of values may include one or more values.

Headings are used below for convenience and are not to be construed as limiting the present invention in any way.

### EXEMPLARY FILESYSTEM

Embodiments of the present invention allow multiple checkpoints to be taken so that multiple versions of the filesystem can be maintained over time. Specifically, multiple separate root structures (referred to hereinafter as "dynamic superblocks" or "DSBs") are used to manage multiple instantiations of the filesystem. The DSBs are preferably stored in fixed locations within the storage system for easy access, although the DSBs may alternatively be stored in other ways. There are typically more than two DSBs, and the number of DSBs may be fixed or variable. There is no theoretical limit to the number of DSBs (although there may be practical limits for various implementations). In this way, if it becomes necessary or desirable to revert the filesystem back to a previous "checkpoint," there are multiple "checkpoints" from which to choose, providing a better chance that there will be an intact version of the filesystem to which the filesystem can be reverted or a checkpoint that contains a particular version of the filesystem.

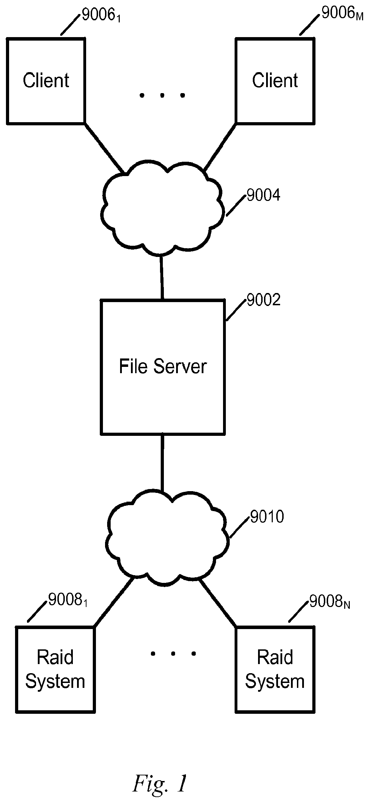

FIG. 1 is a schematic block diagram of a file storage system in accordance with an exemplary embodiment of the present invention. Among other things, the file storage system includes a number of file servers (a single file server 9002 is shown for the sake of simplicity and convenience) in communication with various client devices 9006₁ - 9006_{M} over a communication network 9004 such as an Internet Protocol network (e.g., the Internet) and also in communication with various RAID systems 9008₁ - 9008_{N} over a storage network 9010 such as a FibreChannel network. The client devices 9006₁ - 9006_{M} and the file server 9002 communicate using one or more network file protocols, such as CIFS and/or NFS. The file server 9002 and the RAID systems 9008₁ - 9008_{N} communicate using a storage protocol, such as SCSI. It should be noted that the file storage system could include multiple file servers and multiple RAID systems interconnected in various configurations, including a full mesh configuration in which any file server can communicate with any RAID system over a redundant and switched FibreChannel network.

The file server 9002 includes a storage processor for managing one or more filesystems. The file server 9002 can be configured to allow client access to portions of the filesystems, such as trees or sub-trees under designated names. In CIFS parlance, such access may be referred to as a "share" while in NFS parlance, such access may be referred to as an "export." Internally, the file server 9002 may include various hardware-implemented and/or hardware-accelerated subsystems, for example, as described in United States Patent Application Nos. 09/879,798 and 10/889,158, and may include a hardware-based filesystem including a plurality of linked sub-modules, for example, as described in United States Patent Application Nos. 10/286,015 and 11/841,353. Each RAID system 9008 typically includes at least one RAID controller (and usually two RAID controllers for redundancy) as well as a number of physical storage devices (e.g., disks) that are managed by the RAID controller(s). The RAID system 9008 aggregates its storage resources into a number of SDs. For example, each RAID system 9008 may be configured with between 2 and 32 SDs. Each SD may be limited to a predetermined maximum size (e.g., 2 TB - 64 TB or more). Combining several storage devices into an SD can provide a number of benefits, including increased speed (individual storage devices are relatively slow, but data can be striped across several storage devices to widen the bottleneck), increased capacity (individual storage devices are comparatively small, but several storage devices can be combined to provide more usable space), abstraction (the amount of space used can be either larger or smaller than the size of a single storage device), and resilience (parity or redundancy information can be stored on each storage device so that the SD can withstand the loss of a storage device).

The file server 9002 is configured to use one or more SDs, which can be from a single RAID system or from multiple RAID systems. The file server 9002 can normally interrogate the RAID systems to find out whether each SD is primary or secondary. The method of controlling which SDs are used by the file server 9002 is referred to herein as "licensing." Thus, in practice, the file server 9002 will typically be licensed for some SDs and unlicensed for others.

Internally, the file server 9002 is capable of combining several SDs into a larger storage pool referred to herein as a "span." A span is essentially a RAID 0 array of several SDs. Combining several SDs into a span can provide a number of benefits similar to those obtained by combining multiple physical disks into an SD, including increased speed (spreading I/O between multiple SDs on multiple RAID systems can widen the storage bottleneck further), increased storage capacity (the span can be larger than a single SD, which may be limited to two terabytes), and additional abstraction, which allows for more flexible storage space allocation.

### FILESYSTEM TREE STRUCTURE

The file server 9002 stores various types of objects in the filesystem. The objects may be classified generally as system objects and file objects. File objects are created for storage of user data and associated attributes, such as a word processor or spreadsheet files. System objects are created by the file storage system for managing information and include such things as root directory objects, free-space allocation objects, modified checkpoint objects list objects, modified retained objects list objects, and software metadata objects, to name but a few. More particularly, directory objects are created for storage of directory information. Free-space allocation objects are created for storage of free-space allocation information. Modified checkpoint objects list objects and modified retained objects list objects (both of which are described in more detail below) are created for storage of information relating to checkpoints and retained checkpoints, respectively. An software metadata object (which is described in more detail below) is a special object for holding excess file attributes associated with a file or directory object (i.e., file attributes that cannot fit within pre-designated areas within the file or directory object as described below, such as CIFS security attributes), and is created by the creator of the file or directory object, which includes a reference to the software metadata object within the file or directory object.

An instantiation of the filesystem is managed using a tree structure having root node (referred to as a dynamic superblock or DSB) that is preferably stored at a fixed location within the storage system. Among other things, storing the DSB at a fixed location makes it easy for the file server 9002 to locate the DSB. The file server 9002 may maintain multiple DSBs to store different versions of the filesystem representing different checkpoints (e.g., a current "working" version and one or more "checkpoint" versions). In an exemplary embodiment, the DSB includes a pointer to an indirection object (described in detail below), which in turn includes pointers to other objects.

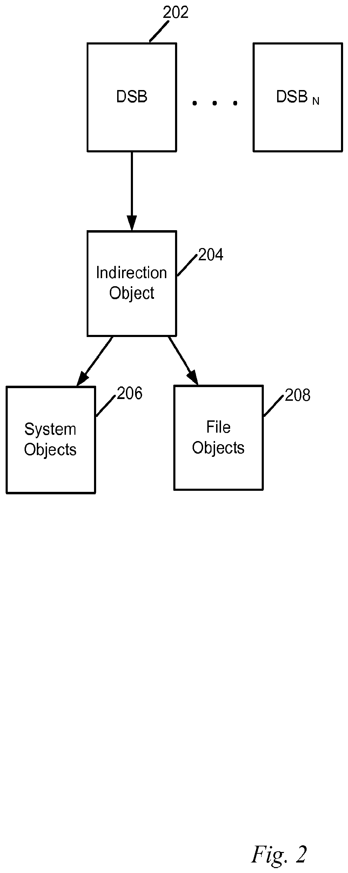

FIG. 2 is a schematic block diagram showing the general format of a filesystem instantiation in accordance with an exemplary embodiment of the present invention. The DSB 202 is a special structure that represents the root of the filesystem tree structure. Among other things, the DSB 202 includes a pointer to an indirection object 204, which in turn includes pointers to other objects in the filesystem including system objects 206 and file objects 208.

In embodiments of the present invention, N dynamic superblocks (N > 2) are maintained for a filesystem, only one of which is considered to be the most up to date at any given point in time. The number of DSBs may be fixed or configurable. The DSBs are located at fixed locations and are used to record the state of the checkpoints on the disk. Each DSB points to an indirection object.

Among other things, the following information is stored in each dynamic superblock:
- The checkpoint number associated with this dynamic superblock.
- The handle of the modified checkpoint objects list object for this checkpoint.
- The object number of the modified retained objects list object from the last retained checkpoint.
- The state of this checkpoint (i.e., whether or not a checkpoint has been created).
- A CRC and various other information to allow the DSB and other structures (e.g., the indirection object) to be checked for validity.

In an exemplary embodiment, the DSBs are treated as a circular list (i.e., the first dynamic superblock is considered to successively follow the last dynamic superblock), and each successive checkpoint uses the next successive dynamic superblock in the circular list. When the file server 9002 opens the volume, it typically reads in all dynamic superblocks and performs various checks on the DSBs. The DSB having the latest checkpoint number with the checkpoint state marked as completed and various other sanity checks passed is considered to represent the latest valid checkpoint on this volume. The file server 9002 begins using the next DSB in the circular list for the next checkpoint.

The general format of the indirection object 204 is discussed below.

### OBJECT TREE STRUCTURE

Generally speaking, each object in the filesystem, including the indirection object 204, each of the system objects 206, and each of the file objects 208, is implemented using a separate tree structure that includes a separate object root node and optionally includes a number of indirect nodes, direct nodes, and storage blocks. The DSB 202 includes a pointer to the root node of the indirection object 204. The indirection object 204 includes pointers to the root nodes of the other objects.

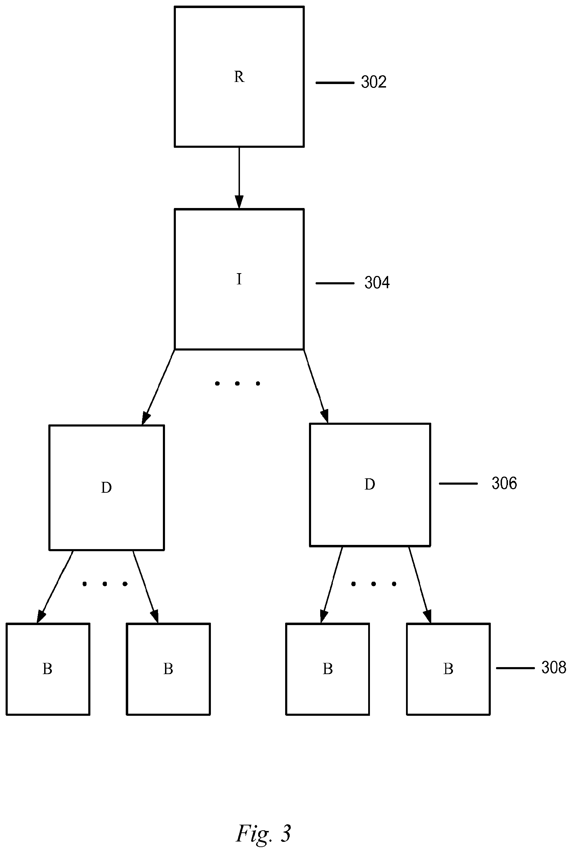

FIG. 3 is a schematic block diagram showing the general format of an object tree structure in accordance with an exemplary embodiment of the present invention. A root ("R") node 302 may point to various indirect ("I") nodes 304, each of which may point to a number of direct ("D") nodes 306, each of which may point to a number of storage blocks ("B") 308. In practice, object tree structures can vary widely, for example, depending on the size of the object. Also, the tree structure of a particular object can vary over time as information is added to and deleted from the object. For example, nodes may be dynamically added to the tree structure as more storage space is used for the object, and different levels of indirection may be used as needed (e.g., an indirect node can point to direct nodes or to other indirect nodes).

When an object is created, an object root node is created for the object. Initially, the root node of such an "empty" object has no pointers to any indirect nodes, direct nodes, or data blocks.

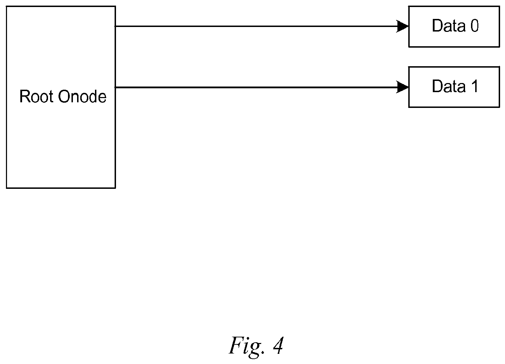

As data is added to the object, it is first of all put into data blocks pointed to directly from the root node. This is illustrated in the diagram of FIG. 4, showing use of a root node with no other nodes. Note that, for the sake of simplicity in this and all the following diagrams, the root node and direct node are shown as having only two data pointers, and the indirect node is shown as only having two indirect or direct node pointers.

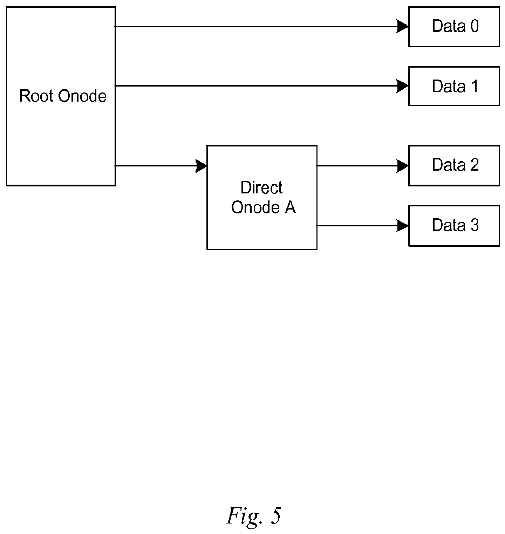

Once all the direct block pointers in the root node are filled, then a direct node A is created with a pointer from the root node to the direct node. FIG. 5 shows employment of a root node with this direct node A. Note that the root node has multiple data block pointers but only a single pointer to either a direct or an indirect node.

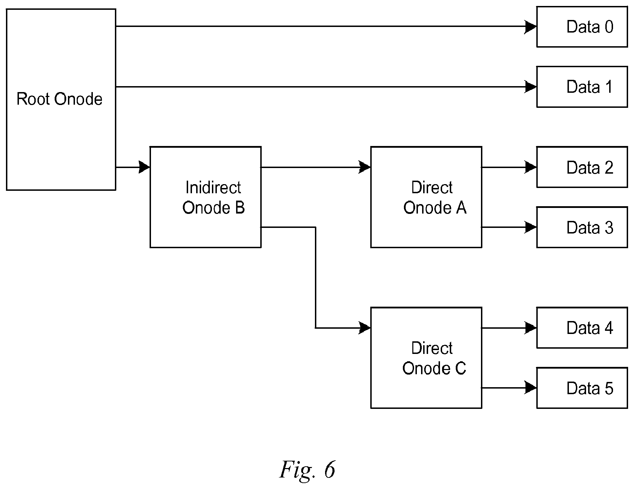

If the data in the object grows to fill all the data pointers in the direct node, then an indirect node B is created, as illustrated in FIG. 6. FIG. 6 shows employment of a root node with an indirect node as well as direct nodes. The pointer in the root node which was pointing to the direct node A, is changed to point at the indirect node B, and the first pointer in the indirect node B is set to point at the direct node A. At the same time a new direct node C is created, which is also pointed to from the indirect node B. As more data is created more direct nodes are created, all of which are pointed to from the indirect node.

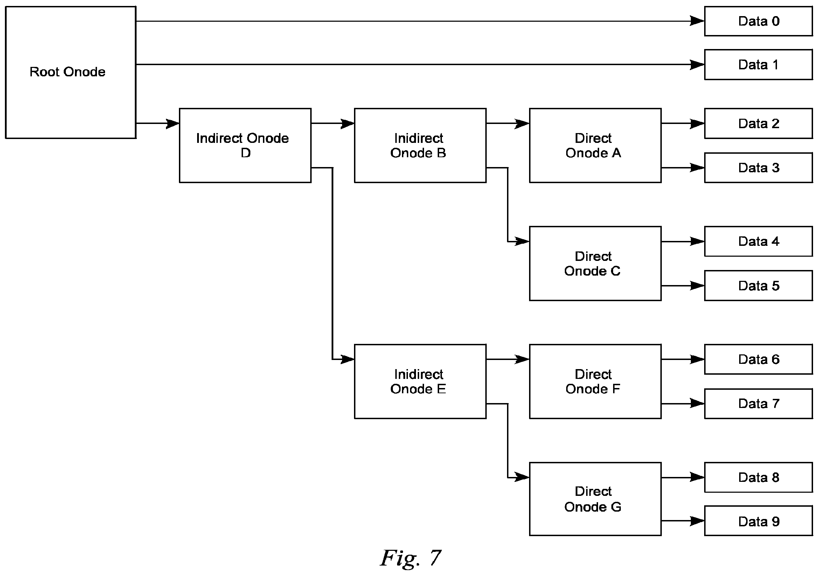

Once all the direct node pointers in the indirect node B have been used another indirect node D is created which is inserted between the root node and the first indirect node B. Another indirect node E and direct node F are also created to allow more data blocks to be referenced. These circumstances are shown in FIG. 7, which illustrates use of multiple layers of indirect nodes placed between the root node and the direct nodes.

This process of adding indirect nodes to create more levels of indirection is repeated to accommodate however much data the object contains.

The object root node includes a checkpoint number to identify the checkpoint in which the object was last modified (the checkpoint number initially identifies the checkpoint in which the object was created and thereafter the checkpoint number changes each time the object is modified in a new checkpoint). In an exemplary embodiment, the checkpoint number at which the object was created is also stored in the object root node. Also in the object root node is a parameter to identify the type of object for which the object root node is providing metadata. The object type may, for example, be any of freespace, file, or directory. In addition to object type, the object root node also has a parameter for the length of the object in blocks.

The object root node also carries a series of pointers. One of these is a pointer to any immediately preceding version of the object root node. If it turns out that a retained checkpoint has been taken for the pertinent checkpoint, then there may have been stored an immediately preceding version of the object root node in question, and the pointer identifies the sector number of such an immediately preceding version of the object root node.

For the actual data to which the object root node corresponds, the object root node includes a separate pointer to each block of data associated with the corresponding object. The location of up to 18 data blocks is stored in the object root node. For data going beyond 18 blocks, a direct node is additionally required, in which case the object root node also has a pointer to the direct node, which is identified in the object root node by sector number on the disk.

The direct node includes a checkpoint number and is arranged to store the locations of a certain number of blocks (e.g., about 60 or 61 blocks) pertinent to the object.

When a first direct node is fully utilized to identify data blocks, then one or more indirect node are used to identify the first direct node as well as additional direct nodes that have blocks of data corresponding to the object. In such a case, the object root node has a pointer to the indirect node, and the indirect node has pointers to corresponding direct nodes. When an indirect node is fully utilized, then additional intervening indirect nodes are employed as necessary. This structure permits fast identification of a part of a file, irrespective of the file's fragmentation.

Various embodiments of the present invention may include mechanisms to facilitate creation of large files, which are typically sparse files that are filled with zeros when first created.

One such mechanism allows zero-filled data blocks to be allocated without actually writing zeros into the data blocks. Specifically, the object root nodes and the direct nodes include a flag for each block pointer to indicate whether the corresponding block is logically filled with zeros (the block does not actually need to be filled with zeros). Thus, for example, when a data block is allocated, rather than filling the data block with zeros, the bit associated with the data block can be set to indicate that the data block is zero-filled, and read accesses to that data block will return zeros without actually reading data from the data block.

A similar mechanism allows files to be created without actually allocating all data blocks and nodes for the file. Specifically, pointers to blocks and other nodes may include a bit to indicate whether or not the block or other node has been actually created. In a case where the relevant blocks and nodes have not yet been created, then blocks and nodes are created as necessary to accommodate write requests, and the allocation bit is toggled accordingly. Note that creating a block requires allocation of space, writing the data to the block, and setting the bit flags for the pertinent nodes. In one particular exemplary embodiment, this mechanism is only used to create files without allocating all data blocks; other file nodes are allocated as described above.

transaction log, as well has being maintained on the fly in a metadata cache.

Node structure may also be established, in an exemplary embodiment, in a manner to further reduce disk writes in connection with node structures. In the end, the node structure needs to accommodate the storage not only of file contents but also of file attributes. File attributes include a variety of parameters, including file size, file creation time and date, file modification time and date, read-only status, and access permissions, among others. This connection takes advantage of the fact that changing the contents of an object root node can be performed frequently during a given checkpoint, since the object root node is not yet written to disk (i.e., because disk writes of object root nodes are delayed, as discussed above). Therefore, in an exemplary embodiment, a portion of the object root node is reserved for storage of file attributes.

More generally, the following structures for storage of file attributes are defined in an exemplary embodiment:
**enode** (little overhead to update, limited capacity). This structure is defined in the object root node and is 128 bytes in an exemplary embodiment.
**software metadata object** (expensive in overhead to update, near infinite capacity). This is a dedicated object for storage of metadata and therefore has its own storage locations on disk; the object is identified in the enode.

Thus, in an exemplary embodiment, each object root node stores the following types of information:
- The checkpoint number.
- The data length for this version of the object.
- The number of levels of indirection used in the runlist for this object.
- The type of the object. This is primarily used as a sanity check when a request comes in to access the object.
- A pointer to an older root node version made for a retained checkpoint (if there is one).
- A pointer to a newer root node version (will only be valid if this is a copy of a root node made for a retained checkpoint).
- Up to 19 data block descriptors. Each data block descriptor includes a pointer to a data block, the checkpoint number, and a bit to say whether the block is zero filled.
- A single pointer to either a direct node or an indirect node.
- The 128 bytes of enode data for this object.
- A CRC and various sanity dwords to allow the root node to be checked for validity.

As discussed below, an object may include copies of root nodes that are created each time a retained checkpoint is taken. The pointer to the older root node version and the pointer to the newer root node version allow a doubly-linked list of root nodes to be created including the current root node and any copies of root nodes that are created for retained checkpoints. The doubly-linked list facilitates creation and deletion of retained checkpoints.

As discussed above, the indirect node provides a level of indirection between the root node and the direct node. The following information is stored in the indirect node in an exemplary embodiment:
- The checkpoint number.
- Pointers to either indirect or direct nodes (e.g., up to 122 such pointers).
- A CRC and various sanity dwords to allow the indirect node to be checked for validity.

As discussed above, the direct node provides direct pointers to data blocks on the disk. The following information is stored in the direct node in an exemplary embodiment:
- The checkpoint number.
- A number of data block descriptors (e.g., up to 62 such descriptors). Each data block descriptor includes a pointer to a data block, the checkpoint number, and a bit to say whether the block is zero filled.
- A CRC and various sanity dwords to allow the indirect node to be checked for validity.

As data is deleted from the object and data blocks and direct and indirect nodes are no longer required, they are returned to the free space allocation controller.

In accordance with one embodiment, the number of levels of indirection decreases as the object gets smaller, until all the data in the object can be referenced via the direct block pointers in the root node, at which point all the remaining direct and indirect nodes are freed and the indirection level will be set to zero.

If a write operation to a particular file object has a start offset that is beyond the current end of the object or the length of the object is set to be greater than the current length, then the undefined portion of the object (e.g., between the current end of the object and the start of newly written data) is typically filled with zeroes. In a typical implementation, this involves allocating disk blocks for all zero-filled portions of the object and filling those disk blocks with zeros. For a 1GB file, this might take of the order of 10 seconds. For a 1 TB file, it might take on the order of 3 hours.

In an exemplary embodiment of the present invention, rather than actually zero-filling the data blocks associated with undefined portion of the object, the contents of those data blocks are left unwritten, and a bit within each data block pointer is used to indicate that the block is deemed to be zero-filled. If the file server 9002 (and, in particular, the Object Store sub-module) sees this bit set, then it knows that the block should be filled with zeroes, even though on disk it may contain something completely different. If the block is read, then the file server 9002 returns zeroes for this block rather than returning its actually on-disk contents. If the block is written in such a way that the write does not fill the entire block, then the file server 9002 will write zeroes to the portion of the block that is not being written and will then reset the "zero-filled" bit for this block.

Another concern with setting the length of an object to some very large value is the time it takes to allocate the data blocks and create the required direct and indirect node structures. For example, in an exemplary embodiment using a disk block size of 4K, a 1 TB object requires approximately 4 million direct nodes as well as a lesser number of indirect nodes. This might take in the order of 40 seconds to write to disk. Also the free space allocation of all the data blocks required, and the subsequent updates to the free space bitmap, would significantly add to this time. If a checkpoint were to be taken immediately after the file creation begins, the entire system generally would stop servicing requests (to any volumes) for the whole of this time.

In an alternative embodiment of the invention, this issue may be addressed by not actually allocating disk blocks for the zero-filled portions of the file, as discussed above. This means that when the object store sees a write to a zero filled block, it would first have to allocate disk space for that block and put a pointer to it in the relevant node structure.

In yet another alternative embodiment, in addition to not actually allocating disk blocks for the zero-filled portions of the file, this issue may be address by also not creating the corresponding node structures either. To implement this aspect, each node pointer could include a bit to indicate whether or not the node to which it points is allocated. If the node is not allocated, when an operation comes along which requires that node to be valid, only then would disk space be allocated for it and the correct pointer inserted. In this way, a huge zero-filled object may have only a root node, which can be created very quickly.

### OBJECT NUMBERS AND THE INDIRECTION OBJECT

Within the file storage system, each object is associated with an object number that is used to reference the object. System objects typically have fixed, predefined object numbers, since they generally always exist in the system. File objects are typically assigned object numbers dynamically from a pool of available object numbers. These file object numbers may be reused in some circumstances (e.g., when a file is deleted, its object number may be freed for reuse by a subsequent file object).

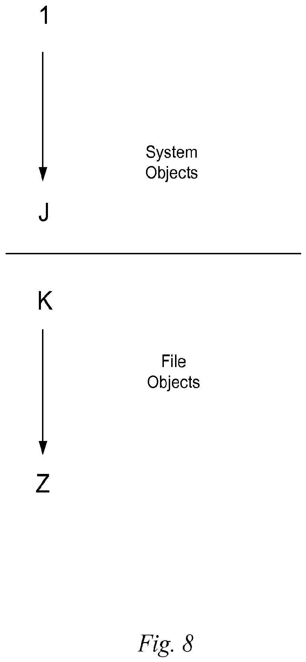

FIG. 8 shows a representation of object number assignments for an exemplary embodiment of the present invention. Specifically, the filesystem may include Z object numbers (where Z is variable and may grow over time as the number of objects increases). A certain range of object numbers is reserved for system objects 206 (in this example, object numbers 1-J), and the remaining object numbers (in this example, object numbers K - Z) are assigned to file objects 208. Typically, the number of system objects 206 is fixed, while the number of file objects 208 may vary.

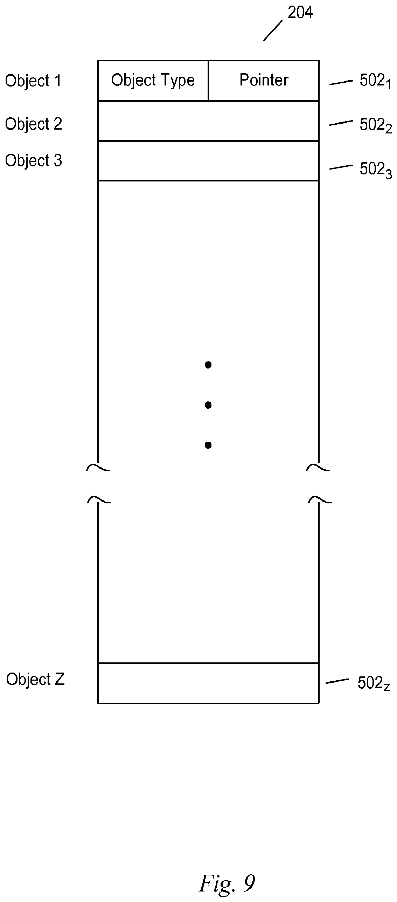

In an exemplary embodiment, the indirection object 204 is logically organized as a table, with one table entry per object indexed by object number. As shown in FIG. 9, each entry 502 in the table includes an object type field and a pointer field. A number of different values are defined for the object type field, but for the sake of discussion, one set of values is defined for "used" objects and another set of values is defined for "free" objects. Thus, the value in the object type field of a particular table entry will indicate whether the corresponding object number is used or free.

The pointer field of each used table entry includes a pointer to the root node of the object. When an object is created, an object root node is created (as discussed above), and an object number is assigned to the object. A pointer to the object root node is stored in the indirection object 204, specifically in the table entry associated with the assigned object number. Therefore, the file server 9002 can easily locate the object root node of any object based on its object number, specifically by indexing into the indirection object table structure and accessing the pointer field. Initially, the root node of such an "empty" object has no pointers to any indirect nodes, direct nodes, or data blocks, although data blocks, indirect nodes, and direct nodes may be added to the object tree structure over time.

The pointer fields of free table entries are used to maintain one or more free object number lists (and preferably two singly-linked, non-circular free object number lists, for example, as described in U.S. Provisional Patent Application No. 60/979,561 entitled System, Device, and Method for Validating Data Structures in a Storage System, which was filed on October 12, 2007.

Specifically, the table entry associated with each free object number includes a reference to a next free object number in its free object number list rather than a pointer to the root node of an object. Because a free object number list is a singly-linked, non-circular list in an exemplary embodiment, the table entry associated with the last free object number in a free object number list includes a "null" reference (e.g., the value zero).

Theoretically, it would be possible to maintain a single free object number list in the indirection object. Free object numbers in the list could be recycled and removed from the list as new objects are created, and free object numbers could be added to the list as objects are deleted from the system.

In an exemplary embodiment of the invention, however, two separate free object number lists are maintained in the indirection object, one listing free object numbers that are immediately available for recycling and the other listing newly freed object numbers that are not immediately available for recycling. In this exemplary embodiment, the file server takes a "checkpoint" or "snapshot" of the filesystem from time to time (e.g., as discussed below or in United States Patent Application No. 10/286,015 entitled Apparatus and Method for Hardware-Based File System filed on November 1, 2002 in the name of Geoffrey S. Barrall et al. and United States Patent Application No. 11/841,353 entitled Apparatus and Method for Hardware-Based File System filed on August 20, 2007 in the name of Geoffrey S. Barrall et al., such that, at any give time, the file server has a "working copy" of the filesystem that may change, for example, as objects are created, deleted, and modified. For various reasons, it is important for this exemplary embodiment to ensure that, overtime, different objects that are assigned a particular recycled object number are given different object handles. Therefore, in this exemplary embodiment, two free object number lists are used to ensure that a particular object number cannot be freed and reused within the same working copy of the filesystem (i.e., by adding freed object numbers to one list but allocating object numbers from the other list), and the bottom 32 bits of the current checkpoint number are included in the object handle when the object is created so that objects created in different checkpoints will have different handles. Thus, during any particular working copy of the filesystem, the file server recycles free object numbers from one list while adding newly freed object numbers to the other list. At each "checkpoint," the roles of the two lists are "swapped" so that object numbers freed during the previous checkpoint are available to be recycled while new object numbers that are freed during the current checkpoint are not available to be recycled during that checkpoint. If the list from which free object numbers are being recycled is empty when a new object is being created, then the indirection object is expanded in order to provide additional free object numbers (even though there may actually be some free object numbers in the other list). In practice, however, both lists will generally accumulate a number of free object numbers over time due to the role swapping at each checkpoint, so, in the steady state, the indirection object should not need to expand often.

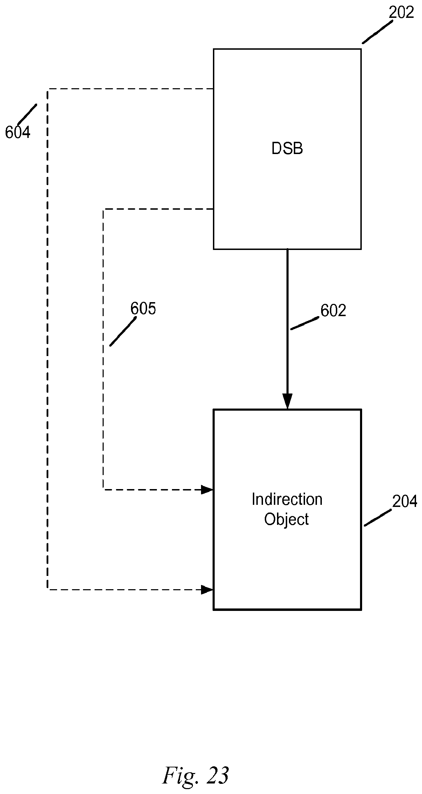

FIG. 23 is a schematic block diagram showing the relationship between the DSB 202 and the indirection object 204 in accordance with an exemplary embodiment of the present invention. As shown, the DSB 202 includes a pointer 602 to the indirection object 204 (and, more specifically, to the root node of the indirection object 204), and also includes two pointers 604 and 605, one for each of the free object number lists in the indirection object 204. For convenience, the two pointers may be referred to hereinafter as "DSB.listA" and "DSB.listB." Each pointer 604, 605 points to the table entry at the start of its respective free object number list. Because the DSB 202 is stored at a fixed location within the storage system and includes pointers to the indirection object 204 and the free object number lists within the indirection object 204, the file server 9002 can easily locate the indirection object 204 (and hence the root node of any other object) as well as free object number lists using the DSB 202.

Thus, with reference again to the table structure of the indirection object 204 shown in FIG. 9, the value in the object type field of a particular table entry will indicate whether the corresponding object number is used or free. If that object number is used, then the pointer field of that table entry will include a pointer to the root node of the corresponding object. If, however, that object number is free, then the pointer field of that table entry will include a reference to a next free object number in its free object number list.

Generally speaking, freed object numbers are added to the head of a free object number list, and recycled object numbers are also taken from the head of a free object number list. The following is exemplary pseudo-code for adding a freed object number "i" to free object number list A:
table[i].type = free
table[i].pointer = DSB.listA
DSB.listA = i

The following is exemplary pseudo-code for recycling a free object number from free object number list A:
i = DSB.listA
DSB.listA = table[i].pointer
table[i].type = used
table[i].pointer = pointer to object root node

As discussed above, it may be necessary or desirable to verify the indirection object 204, including the free object number list(s), from time to time in order to ensure that all free object numbers are included in the free object number list(s) and that no "used" object numbers are included in the free object number list(s). One way to verify the indirection object 204, including the free object number list(s), is to traverse each free object number list from the start to end to ensure that there are no loops and to ensure that the list ends with a null reference. However, in a working data storage system, it is not unusual for large numbers of objects to be created and deleted over time, such that the free object number list(s) can become quite long. Furthermore, the free object number lists are not ordered but instead are updated as object numbers happen to be used and freed, so traversing a free object number list would generally entail jumping around the indirection object 204 according to the references of the singly-linked list. Such traversal of a free object number list would generally be slow and inefficient.

Therefore, in an exemplary embodiment of the present invention, the indirection object table structure is traversed sequentially from top to bottom, and the "used" and "free" object numbers are tracked using a bitmap or other appropriate data structure. Specifically, if a particular object number is used, then the corresponding bit in the bitmap is marked; if that bit was already marked, then the indirection object is corrupted (e.g., because that "used" object number is erroneously referenced by an earlier "free" entry). If a particular object number is free, then the corresponding entry in the indirection object table structure includes a reference to the next free object number in the free object number list, so the bit corresponding to such next free object number is marked in the bitmap; if that bit was already marked, then the indirection object is corrupted (e.g., because the free object number list includes a "used" object number or because the free object number list includes a circular reference). After the entire indirection object table structure has been traversed, the two starting table entries, which are pointed to by the pointers 604, 605 in the DSB 202, are checked, and if either table entry is "used," then the indirection object is corrupted. Furthermore, after the entire indirection object table structure has been traversed, the only bits that should be left unmarked are the bits associated with the two starting table entries for the two free object number lists, which are pointed to by the pointers 604, 605 in the DSB 202. If either of those bits is marked, then the indirection object is corrupted. If any other bits in the bitmap are unmarked, then the corresponding object numbers are neither used nor included in the free object number lists, in which case the indirection object is usable (because such "unlinked" free entries will not be recycled in the normal course). Additional processing may be performed to ensure that each free object number list terminates with a null reference.

In various alternative embodiments, the bitmap could be initialized to all zeros, and a bit in the bitmap could be "marked" by setting the bit (i.e., to one); in this regard, a so-called "test-and-set" operation may be used to both test the value of the bit and set the bit in a single operation. Alternatively, the bitmap could be initialized to all ones and a bit in the bitmap could be "marked" by clearing the bit (i.e., to zero). Of course, other types of data structures and other types of marking schemes may be used in other embodiments. The present invention is not limited to the use of a bitmap or to any particular type of data structure or marking scheme.

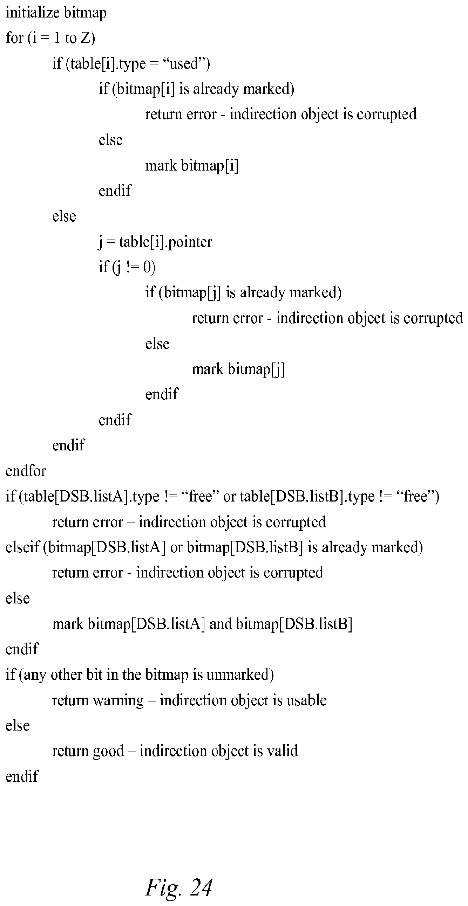

FIG. 24 is a logic flow diagram showing exemplary high-level pseudo-code for validating the indirection object 204 in accordance with an exemplary embodiment of the present invention. The logic first initializes the bitmap. The logic then sequentially processes each table entry in the indirection object. Specifically, the logic inspects the object type field of the table entry to determine whether the corresponding object number is used or free. If the object number is used, then the logic checks the corresponding bit in the bitmap to see if it is already marked; if so, then processing terminates because the indirection object is corrupted; if not, then the logic marks the bit. If, on the other hand, the object number is free, then unless the next free object number referenced in the table entry is zero, the logic checks the bit in the bitmap corresponding to the next free object number referenced in the table entry to see if it is already marked; if so, then processing terminates because the indirection object is corrupted; if not, then the logic marks the bit. Assuming no errors were found during processing of the table entries, the logic performs additional processing to check that the two starting table entries for the two free object number lists are "free" and that the only bits left unmarked in the bitmap are the bits associated with the two starting table entries for the two free object number lists (e.g., by testing those bits and setting them if unmarked, and then checking to see if any other bits remain unmarked); if so, then the indirection object is valid; if not, then the indirection object is corrupted. If the only problem is that there is one or more "unlinked" free object numbers, then the indirection object is considered to be usable.

The following examples are included to demonstrate a number of scenarios in which valid and error conditions are detected in accordance with the processing described above. For the sake of simplicity, these examples are based on sample indirection object structures and corresponding bitmaps that include eight entries each, although, in practice, these data structures would typically be significantly larger. Each table entry is designated by an entry number and includes a type field indicating the entry type (i.e., used or free) and a pointer field indicating, for free entries, the next entry number in the list. For convenience and clarity, pointers for "used" entries are omitted. The starting table entries for the two free object number lists are indicated by "ListA" and "ListB" pointers.

### EXAMPLE 1 - VALID INDIRECTION OBJECT

The following is a representation of a validly formatted indirection object in accordance with an exemplary embodiment of the present invention:

| | Entry | Type | Pointer |
|---|---|---|---|
| | 1 | used | |
| | 2 | free | next = 8 |
| | 3 | used | |
| List A -----> 4 | free | next = 2 | |
| | 5 | used | |
| List B -----> 6 | free | next = 0 | |
| | 7 | used | |
| | 8 | free | next = 0 |

The following is a representation of the processing sequence for the sample indirection object above:

| Entry | Action |
|---|---|
| 1 | mark bit 1 |
| 2 | mark bit 8 |
| 3 | mark bit 3 |
| 4 | mark bit 2 |
| 5 | mark bit 5 |
| 6 | |
| 7 | mark bit 7 |
| 8 | |

After processing the table entries sequentially without error, the bits indicated by the ListA and ListB pointers (i.e., bits 4 and 6) are checked. Since bits 4 and 6 are the only unmarked bits in the bitmap, the indirection object is deemed to be valid. It should be noted that, in this example, free object number list A includes entries 4, 2, and 8 (in that order), while free object number list B includes only entry 6.

### EXAMPLE 2 - FREE LIST INCLUDES A LATER USED ENTRY

The following is a representation of an invalidly formatted indirection object in which a free list includes a later used entry, in accordance with an exemplary embodiment of the present invention:

| | Entry | Type | Pointer |
|---|---|---|---|
| | 1 | used | |
| | 2 | free | next = 8 |
| | 3 | used | |
| List A -----> 4 | free | next = 2 | |
| | 5 | used | |
| List B -----> 6 | free | next = 7 | |
| | 7 | used | |
| | 8 | free | next = 0 |

The following is a representation of the processing sequence for the sample indirection object above:

| Entry | Action |
|---|---|
| 1 | mark bit 1 |
| 2 | mark bit 8 |
| 3 | mark bit 3 |
| 4 | mark bit 2 |
| 5 | mark bit 5 |
| 6 | mark bit 7 |
| 7 | ERROR - BIT 7 ALREADY MARKED |
| 8 | |

In this example, when processing table entry 7, since table entry 7 is used, bit 7 is checked in the bitmap. Since bit 7 was already marked during the processing of table entry 6, the indirection object is deemed to be invalid because a used table entry is included in a free object number list.

### EXAMPLE 3 - FREE LIST INCLUDES AN EARLIER USED ENTRY

The following is a representation of an invalidly formatted indirection object in which a free list includes an earlier used entry, in accordance with an exemplary embodiment of the present invention:

| | Entry | Type | Pointer |
|---|---|---|---|
| | 1 | used | |
| | 2 | free | next = 8 |
| | 3 | used | |
| List A -----> 4 | free | next = 2 | |
| | 5 | used | |
| List B -----> 6 | free | next = 5 | |
| | 7 | used | |
| | 8 | free | next = 0 |

The following is a representation of the processing sequence for the sample indirection object above:

| Entry | Action |
|---|---|
| 1 | mark bit 1 |
| 2 | mark bit 8 |
| 3 | mark bit 3 |
| 4 | mark bit 2 |
| 5 | mark bit 5 |
| 6 | ERROR - BIT 5 ALREADY MARKED |
| 7 | |
| 8 | |

In this example, when processing table entry 6, since table entry 6 is free, bit 5 (which is referenced in table entry 6) is checked in the bitmap. Since bit 5 was already marked during the processing of table entry 5, the indirection object is deemed to be invalid because a used table entry is included in a free object number list.

### EXAMPLE 4 - UNLINKED FREE ENTRY

The following is a representation of an invalidly formatted indirection object including an unlined free entry, in accordance with an exemplary embodiment of the present invention:

| | Entry | Type | Pointer |
|---|---|---|---|
| | 1 | used | |
| | 2 | free | next = 0 |
| | 3 | used | |
| List A -----> 4 | free | next = 2 | |
| | 5 | used | |
| List B -----> 6 | free | next = 0 | |
| | 7 | used | |
| | 8 | free | next = 0 |

The following is a representation of the processing sequence for the sample indirection object above:

| Entry | Action |
|---|---|
| 1 | mark bit 1 |
| 2 | |
| 3 | mark bit 3 |
| 4 | mark bit 2 |
| 5 | mark bit 5 |
| 6 | |
| 7 | mark bit 7 |
| 8 | |

After processing the table entries sequentially, the bits indicated by the ListA and ListB pointers (i.e., bits 4 and 6) are checked. Even though bits 4 and 6 are unmarked, a problem exists because bit 8 is also unmarked, but the indirection object is considered to be usable because object number 8 effectively cannot be recycled.

### EXAMPLE 5 - FREE ENTRY IN BOTH FREE LISTS

The following is a representation of an invalidly formatted indirection object in which a free entry is included in both free object number lists, in accordance with an exemplary embodiment of the present invention:

| | | Entry | Type | Pointer |
|---|---|---|---|---|
| | | 1 | used | |
| | | 2 | free | next = 8 |
| | | 3 | used | |
| List A -----> | 4 | free | next = 2 | |
| | | 5 | used | |
| List B -----> | 6 | free | next = 8 | |
| | | 7 | used | |
| | | 8 | free | next = 0 |

The following is a representation of the processing sequence for the sample indirection object above:

| Entry | Action |
|---|---|
| 1 | mark bit 1 |
| 2 | mark bit 8 |
| 3 | mark bit 3 |
| 4 | mark bit 2 |
| 5 | mark bit 5 |
| 6 | ERROR - BIT 8 ALREADY MARKED |
| 7 | |
| 8 | |

In this example, object number 8 is included in both free object number lists. When processing table entry 6, since table entry 6 is free, bit 8 (which is referenced in table entry 6) is checked in the bitmap. Since bit 8 was already marked during the processing of table entry 2, the indirection object is deemed to be invalid.

### EXAMPLE 6 - CIRCULAR FREE LIST

The following is a representation of an invalidly formatted indirection object having a circular free list, in accordance with an exemplary embodiment of the present invention:

| | Entry | Type | Pointer |
|---|---|---|---|
| | 1 | used | |
| | 2 | free | next = 8 |
| | 3 | used | |
| List A -----> 4 | free | next = 2 | |
| | 5 | used | |
| List B -----> 6 | free | next = 0 | |
| | 7 | used | |
| | 8 | free | next = 4 |

The following is a representation of the processing sequence for the sample indirection object above:

| Entry | Action |
|---|---|
| 1 | mark bit 1 |
| 2 | mark bit 8 |
| 3 | mark bit 3 |
| 4 | mark bit 2 |
| 5 | mark bit 5 |
| 6 | |
| 7 | mark bit 7 |
| 8 | mark bit 4 |

After processing the table entries sequentially without error, the bits indicated by the ListA and ListB pointers (i.e., bits 4 and 6) are checked. Since bit 4 was already marked during the processing of table entry 8, the indirection object is deemed to be invalid.

### EXAMPLE 7 - LOOP IN FREE LIST

The following is a representation of an invalidly formatted indirection object having a loop in a free list, in accordance with an exemplary embodiment of the present invention:

| | | Entry | Type | Pointer |
|---|---|---|---|---|
| | | 1 | used | |
| | | 2 | free | next = 8 |
| | | 3 | used | |
| List A -----> | 4 | free | next = 2 | |
| | | 5 | used | |
| List B -----> | 6 | free | next = 0 | |
| | | 7 | used | |
| | | 8 | free | next = 2 |

The following is a representation of the processing sequence for the sample indirection object above:

| Entry | Action |
|---|---|
| 1 | mark bit 1 |
| 2 | mark bit 8 |
| 3 | mark bit 3 |
| 4 | mark bit 2 |
| 5 | mark bit 5 |
| 6 | |
| 7 | mark bit 7 |
| 8 | ERROR - BIT 2 ALREADY MARKED |

In this example, the loop from table entry 8 back to table entry 2 is detected during processing of table entry 8, specifically when bit 2 (which is referenced in table entry 8) is checked and found to be already marked. Thus, the indirection object is deemed to be invalid.

### EXAMPLE 8 - INVALID START POINTER IN DSB

The following is a representation of an invalidly formatted indirection object in which the DSB includes a pointer that does not point to the start of a free object number list, in accordance with an exemplary embodiment of the present invention:

| | Entry | Type | Pointer |
|---|---|---|---|
| | 1 | used | |
| | 2 | free | next = 8 |
| | 3 | used | |
| List A -----> | 4 | free | next = 2 |
| | 5 | used | |
| | 6 | free | next = 0 |
| List B -----> | 7 | used | |
| | 8 | free | next = 0 |

The following is a representation of the processing sequence for the sample indirection object above:

| Entry | Action |
|---|---|
| 1 | mark bit 1 |
| 2 | mark bit 8 |
| 3 | mark bit 3 |
| 4 | mark bit 2 |
| 5 | mark bit 5 |
| 6 | |
| 7 | mark bit 7 |
| 8 | |

After processing the table entries sequentially without error, the bits indicated by the ListA and ListB pointers (i.e., bits 4 and 7) are checked. Since bit 7 was already marked during the processing of table entry 7, the indirection object is deemed to be invalid.

Various embodiments may perform additional error checking. For example, before marking a bit in the bitmap (particularly based on a reference to a free object number, i.e., the variable "j" in pseudo-code shown in FIG. 24), a check may be performed to make sure that the reference is within the range of valid object numbers (i.e., if there are Z object numbers, a value greater than Z would be erroneous, indicating that the indirection object is corrupted). Similar error checking could be performed for the two start pointers (i.e., DSB.listA and DSB.listB). Also, before attempting to recycle a table entry from a free object number list, a check may be performed to ensure that the free object number list is not empty (i.e., that the start pointer DSB.listA or DSB.listB is not null).

Furthermore, if the indirection object is determined to be corrupted, then various embodiments may perform additional error processing to determine the type of error that exists. For example, if a particular object number is used but the corresponding bit in the bitmap is already marked, then that object number may be erroneously included in the free object number list. Similarly, if the bit associated with an object number referenced in a "free" table entry is already marked and that referenced object number is used, then that referenced object number may be erroneously included in the free object list. If the bit associated with an object number referenced in a "free" table entry is already marked and that referenced object number is free, then the free object number list may include a circular reference. Other error scenarios may exist.

While the free object number list is a non-circular list in the exemplary embodiment described above, it should be noted that, with appropriate changes to the described validation logic, the free object number list could be implemented using a circular list such that the table entry associated with the last free object number in the free object number list includes a reference back to the table entry associated with the first free object number in the free object number list. Thus, for example, if the free object number list were to include only one free object number, then the table entry associated with that free object number would include a reference to itself instead of a "null" pointer. In such an embodiment, if the indirection object is valid, then the bit associated with the first free object number in the free object number list would be marked during the sequential processing of the table entries (i.e., when the table entry associated with the last free object number in the free object number list is processed), so the logic would not need to specifically check that bit after completing the sequential processing of the table entries. Thus, the following portion of the pseudo-code shown in FIG. 24 would not need to be performed:

```
       if (bitmap[DSB.listA] or bitmap[DSB.listB] is already marked)
                      return - indirection object is corrupted
       else
                      mark bitmap[DSB.listA] and bitmap[DSB.listB]
       endif
```

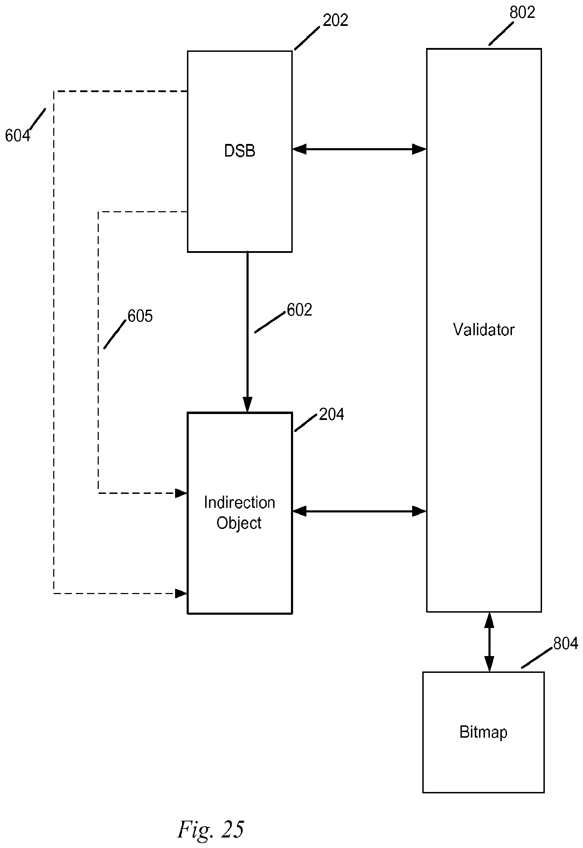

FIG. 25 is a schematic block diagram for a data structure validation system in accordance with an exemplary embodiment of the present invention. Among other things, the validation system includes a validator 802 and a bitmap 804. The validator 802 may access the DSB 202 to locate the indirection object 204 via pointer 602 and/or the start of each free object number list within the indirection object 204 via pointers 604, 605. The validator 802 steps sequentially through the table entries of the indirection object 204, marking used and free object numbers in the bitmap 804 substantially as described above. Assuming no error is encountered during the sequential processing of the table entries, the validator 802 every object number is accounted for in the bitmap 804.

It should be noted that, by traversing the indirection object table structure sequentially and using a bitmap (or other appropriate data structure) to track used and unused object numbers, the indirection object can be validated using a single pass through the indirection object. In an exemplary embodiment of the present invention, such sequential processing enables multiple pointers to be read during a single read operation and also enables the file server to leverage read-ahead functionality that is available in an exemplary embodiment. Thus, an exemplary embodiment provides an efficient way to validate the indirection object.

It should also be noted that, although a bitmap is used to track used and free object numbers in an exemplary embodiment, other types of data structures may alternatively be used to track used and free object numbers. For example, an array or table may be used to track used and free object numbers, with a separate array/table entry associate with each object number.

It should also be noted that, although pointers to the starts of the free object number lists are maintained in the DSB 202 in an exemplary embodiment, the pointers to the starts of the free object number lists may be maintained elsewhere, and the present invention is not limited to any particular manner of maintaining the start pointers.

It should also be noted that, although the roles of the two free object numbers lists are "swapped" at each checkpoint in an exemplary embodiment described above, the free object number lists could be managed in other ways. For example, at each checkpoint, the two lists could be could be combined so that all free object numbers are available for recycling, and one of the lists could be used to track object numbers that are freed during the new checkpoint.

It should also be noted that, because each table entry in the indirection object is processed discretely in an exemplary embodiment, it may be possible to divide up the processing of the indirection object, for example, using multiple computer tasks, multiple computer processors, or multiple instances of hardware logic. Each task, processor, or hardware logic instance could operate on a different, non-overlapping portion of the indirection object table, with the bitmap stored, for example, in a common or shared memory.

It should also be noted that, while an exemplary embodiment described above includes two free object number lists within the indirection object, the present invention is not limited to two free object number lists. Rather, a single free object number list, or, for that matter, more than two free object number lists, may be included within the indirection object, and the logic described with reference to FIG. 24 could be modified appropriately for validating such alternative indirection objects.

It should also be noted that, while exemplary embodiments described above includes one or more free object number lists within an indirection object table structure specifically for tracking free object numbers, the present invention is not limited to any particular use for the table structure or the link list(s) within the table structure. Thus, similar data structures may be used in various alternative embodiments unrelated to object numbers.

In an exemplary embodiment, the indirection object may be implemented as a "pseudo-file" having no actual storage blocks. In an exemplary embodiment, instead of having pointers to actual data blocks in the object tree structure (e.g., as shown in FIG. 2), such pointers in the indirection object tree structure point to the root nodes of the corresponding objects. Thus, in an exemplary embodiment, the indirection object maps each object number to the sector address of the root node associated with the corresponding filesystem object. The indirection object tree structure can then be traversed based on an object number in order to obtain a pointer to the root node of the corresponding object.

In an exemplary embodiment, the indirection object "pseudo-file" is structured so that a common piece of code can be used to traverse the indirection object tree structure based on an object number in order to obtain a pointer to the root node of the corresponding object and to traverse other object tree structures based on a file offset in order to obtain a pointer to the corresponding data block. In such an embodiment, the object number is essentially converted into a virtual file offset, and then the indirection object tree structure is traversed in the same way that other object tree structures are traversed using an actual file offset. One advantage of having common code that can be used to traverse both the indirection object "pseudo-file" tree structure and other object tree structures is that a single logic block can be used for both functions, which is particularly advantageous for the tree traversal function in hardware.

### EXEMPLARY SYSTEM OBJECTS

As discussed above, the filesystem includes various types of system objects. Generally speaking, system objects have fixed, pre-defined object numbers, although certain system objects may have variable object numbers. The following is a description of some system objects in an exemplary embodiment of the present invention.

A root directory object is a system object (i.e., it has a root node and a fixed predetermined object number) that maps file names to their corresponding object numbers. Thus, when a file is created, the file storage system allocates a root node for the file, assigns an object number for the file, adds an entry to the root directory object mapping the file name to the object number, and adds an entry to the indirection object mapping the object number to the disk address of the root node for the file. An entry in the indirection object maps the root directory object number to the disk address of the root directory object's root node.

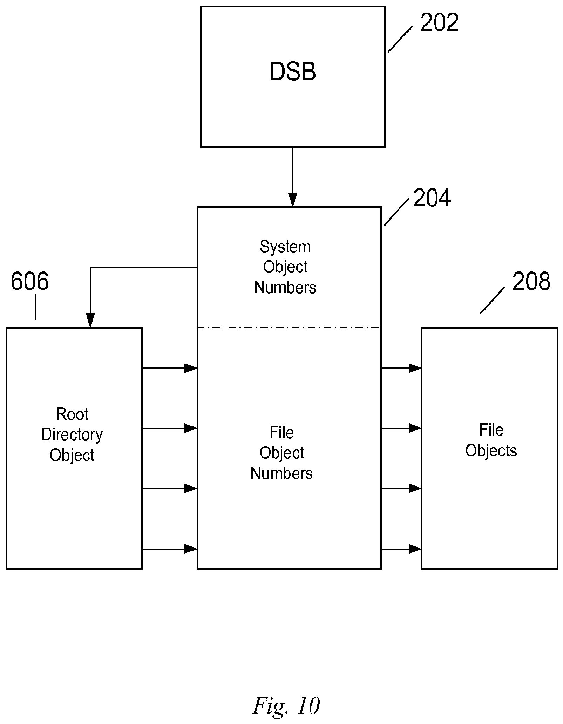

FIG. 10 is a schematic block diagram demonstrating the general relationship between the DSB 202, the indirection object 204, the root directory object 606, and the file objects 208, in accordance with an exemplary embodiment of the present invention. As mentioned above, an entry in the indirection object maps the root directory object number to the disk address of the root directory object's root node, the root directory object maps file names to object numbers, and the indirection object maps object numbers to objects. Therefore, when the file server 9002 needs to locate an object based on the object's file name, the file server 9002 can locate the root directory object 606 via the indirection object (i.e., using the object number associated with the root directory object 606), map the file name to its corresponding object number using the root directory object 606, and then locate the object via the indirection object using the object number.

A free space bit map object is a system object (i.e., it has a root node and a fixed predetermined object number) that indicates free storage blocks in the file storage system. An entry in the indirection object maps the free space bit map object number to the disk address of the free space bit map object's root node.

A modified checkpoint objects lists object is a system object (i.e., it has a root node and a fixed predetermined object number) that identifies objects that have been created or modified during a checkpoint cycle. At the start of each checkpoint, a modified checkpoint objects list object is created. Each time a different object is created or modified as part of this checkpoint, its object number is written to the modified checkpoint objects list object so that, when the checkpoint is created, there is an object that lists all the objects created or modified in that checkpoint.

A free blocks object is a system object that is used to keep track of data blocks that have become unused by the filesystem during a particular checkpoint. The free blocks object lists the sector addresses that are available to be freed. The fact that a particular data block has become unused by the filesystem does not necessarily mean that the data block can be freed for reuse, since the data block may be associated with an earlier checkpoint and/or retained checkpoint. Thus, other mechanisms (e.g., a background cleanup task) are typically used to decide how and when blocks are available to be freed.

In one contemplated embodiment, the file storage system would maintain N free blocks objects for N checkpoints (where N is typically greater than two), with the indirection object including separate entries for the N free blocks objects using fixed predetermined free blocks object numbers (i.e., N entries in the indirection object). In such an embodiment, when a particular checkpoint is being deleted (e.g., the N+1th checkpoint), the file storage system would process the free blocks object associated with that checkpoint so that the information contained therein is not lost.

In an alternate contemplated embodiment, the file storage system could maintain more than N free blocks objects (even though only N checkpoints are maintained) so that the free blocks objects could be processed using a background cleanup process rather than a run-time process. In such an embodiment, since the number of free blocks objects in the system could vary, it would not be practical to have a fixed number of entries in the indirection object, so a directory of free blocks objects (e.g., a free blocks directory object) could be used instead. Here, a single entry in the indirection object could be used for the free blocks directory object, and the free blocks directory object could maintain pointers to the individual free blocks objects.

A retained checkpoint configuration object is a system object that is used to maintain a list of retained checkpoints. An entry in the indirection object maps the retained checkpoint configuration object number to the disk address of the retained checkpoint configuration object's root node. The retained checkpoint configuration object is discussed in further detail below.

### MULTI-WAY CHECKPOINTS

The processing of file system requests is delineated by a series of checkpoints that are scheduled to occur no less frequently than some user-specified interval, such as every 10 seconds. Checkpoints may be taken at other times such as, for example, if more than half of the non-volatile RAM being used for the current checkpoint is full, if the sector cache is becoming full, if the user requests a retained checkpoint (discussed below), or under other appropriate circumstances.

With respect to each successive checkpoint, there is stored, on disk, current file structure information that supersedes previously stored file structure information from the immediately preceding checkpoint. Checkpoints are numbered sequentially and are used to temporally group processing of file requests.

As discussed above, exemplary embodiments of the present invention maintain N DSBs (where N is greater than two, e.g., 16). The DSBs are used to take successive checkpoints.

Thus, at any given time, there is a current (working) version of the filesystem and one or more checkpoint versions of the filesystem. Because the storage system is typically quite dynamic, the current version of the filesystem will almost certainly begin changing almost immediately after taking a checkpoint. For example, filesystem objects may be added, deleted, or modified over time. In order to maintain checkpoints, however, none of the structures associated with stored checkpoints can be permitted to change, at least until a particular checkpoint is deleted or overwritten. Therefore, as objects in the current version of the filesystem are added, deleted, and modified, new versions of object tree structures are created as needed, and the various pointers are updated accordingly.

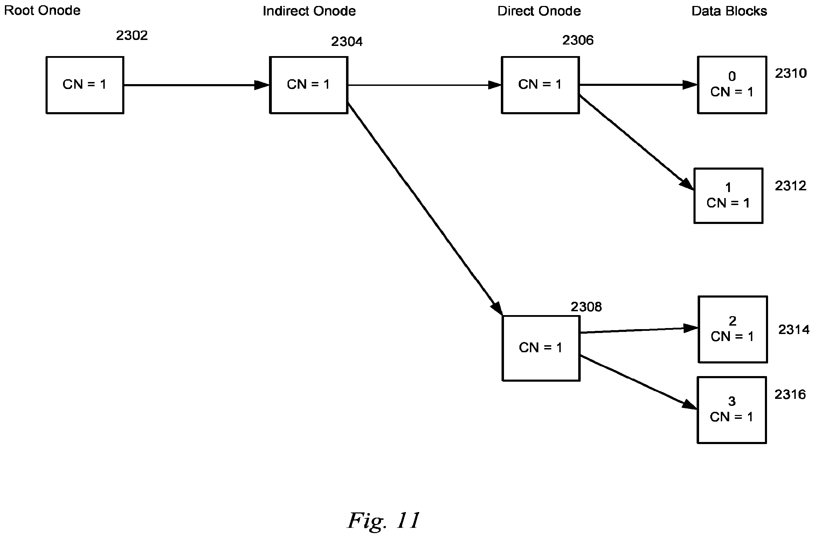

For example, FIG. 11 schematically shows an object structure for an exemplary object that was created at a checkpoint number 1. The object includes four data blocks, namely data block 0 (2310), data block 1 (2312), data block 2 (2314), and data block 3 (2316). A direct node 2306 includes a pointer to data block 0 (2310) and a pointer to data block 1 (2312). A direct node 2308 includes a pointer to data block 2 (2314) and a pointer to data block 3 (2316). An indirect node 2304 includes a pointer to direct node 2306 and a pointer to direct node 2308. A root node 2302 includes a pointer to indirect node 2304. All nodes and all data blocks are marked with checkpoint number 1.

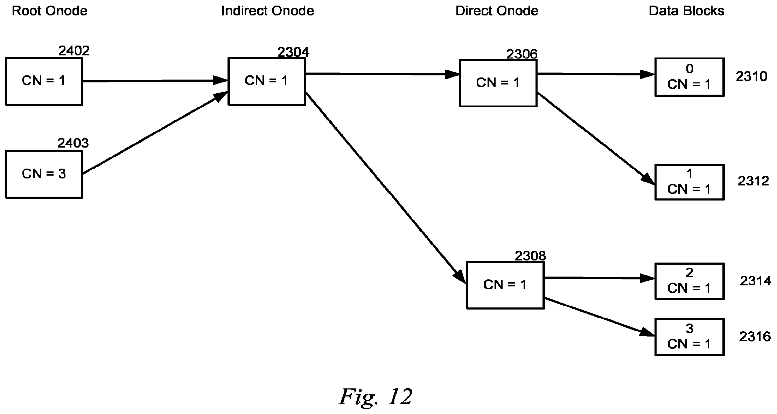

Suppose now that data block 0 (2310) is to be modified in checkpoint number 3. Since root node 2402 is part of an earlier checkpoint, it cannot be modified. Instead, the Object Store sub-module of the file server 9002 saves a copy of the old root node 2302 to free space on the disk and marks this new root node with checkpoint number 3 (i.e., the checkpoint at which it was created). FIG. 12 schematically shows the object structure after creation of the new root node 2403. At this point, both root node 2402 and new root node 2403 point to indirect node 2304.

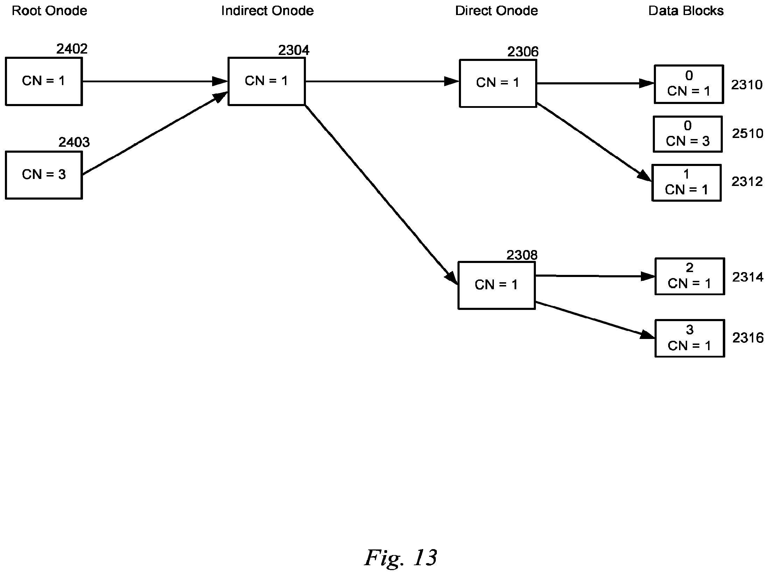

The Object Store sub-module then traverses the object structure starting at the root node until it reaches the descriptor for data block 0 (2310). Since data block 0 (2310) is part of an earlier checkpoint, it cannot be modified. Instead, the Object Store sub-module creates a modified copy of data block 2310 in free space on the disk and marks this new data block with checkpoint number 3 (i.e., the checkpoint at which it was created). FIG. 13 schematically shows the object structure after creation of the new data block 2510.

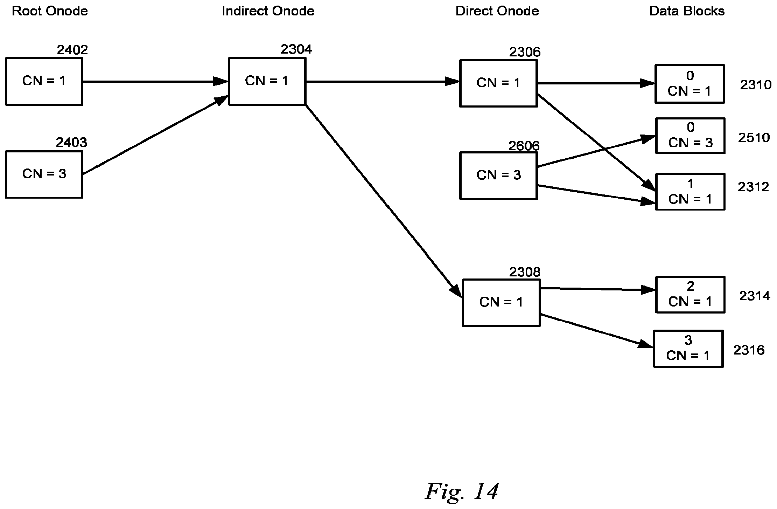

The Object Store sub-module now needs to put a pointer to the new data block 2510 in a direct node, but the Object Store sub-module cannot put a pointer to the new data block 2510 in the direct node 2306 because the direct node 2306 is a component of the earlier checkpoint. The Object Store sub-module therefore creates a modified copy of direct node 2306 to free space on the disk including pointers to the new data block 0 (2510) and the old data block 1 (2312) and marks this new direct node with checkpoint number 3 (i.e., the checkpoint at which it was created). FIG. 14 schematically shows the object structure after creation of the new direct node 2606 including pointers to the new data block 0 (2510) and the old data block 1 (2312).

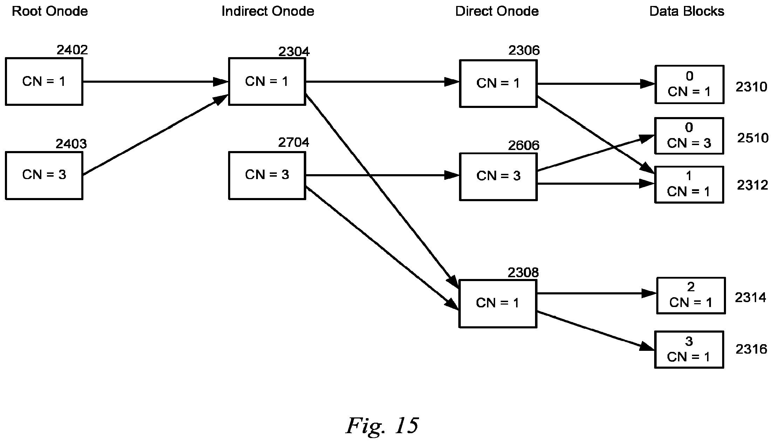

The Object Store sub-module now needs to put a pointer to the new direct node 2606 in an indirect node, but the Object Store sub-module cannot put a pointer to the new direct node 2606 in the indirect node 2304 because the indirect node 2304 is a component of the earlier checkpoint. The Object Store sub-module therefore creates a modified copy of indirect node 2304 with pointers to the new direct node 2606 and the old direct node 2308. FIG. 15 schematically shows the object structure after creation of the new indirect node including pointers to the new direct node 2606 and the old direct node 2308.

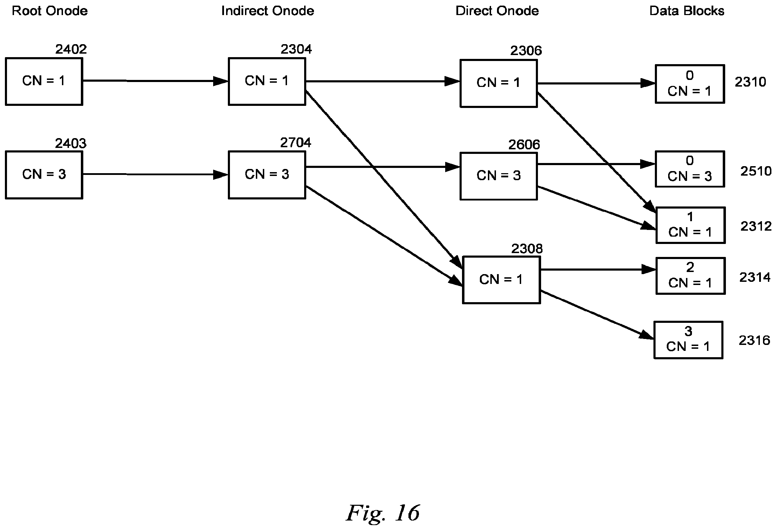

Finally, the Object Store sub-module writes a pointer to the new indirect node 2704 in the new root node 2403. FIG. 16 schematically shows the object structure after the pointer to the new indirect node 2704 is written into the new root node 2403.

It should be noted that, after modification of data block 0 is complete, blocks 2402, 2304, 2306, and 2310 are components of the checkpoint 1 version but are not components of the current checkpoint 3 version of the object; blocks 2308, 2312, 2314, and 2316 are components of both the checkpoint 1 version and the current checkpoint 3 version of the object; and blocks 2403, 2704, 2606, and 2510 are components of the current checkpoint 3 version of the object but are not components of the checkpoint 1 version.

It should also be noted that the new node do not necessarily need to be created in the order described above. For example, the new root node could be created last rather than first.

Thus, when a filesystem object is modified, the changes propagate up through the object tree structure so that a new root node is created for the modified object. A new root node would only need to be created for an object once in a given checkpoint; the new root node can be revised multiple times during a single checkpoint.

In order for the new version of the object to be included in the current version of the filesystem, the current indirection object is modified to point to the root node of the modified object rather than to the root node of the previous version of the object. For example, with reference again to FIG. 16, the current indirection object would be updated to point to root node 2403 rather than to root node 2402 for the object number associated with this object.

Similarly, if a new object is created or an existing object is deleted in the current version of the filesystem, the current indirection object is updated accordingly. For example, if a new object is created, the indirection object is modified to include a pointer to the root node of the new object. If an existing object is deleted, the indirection object is modified to mark the corresponding object number as free.

Since the indirection object is also a tree structure having a root node, modification of the indirection object also propagates up through the tree structure so that a new root node would be created for the modified indirection object. Again, a new root node would only need to be created for the indirection object once in a given checkpoint; the new root node can be revised multiple times during a single checkpoint.

Thus, when a new version of the indirection object is created during a particular checkpoint, the DSB associated with that checkpoint is updated to point to the new root node for the modified indirection object. Therefore, each version of the filesystem (i.e., the current version and each checkpoint version) generally will include a separate version of the indirection object, each having a different indirection object root node (but possibly sharing one or more indirect nodes, direct nodes, and/or data blocks).

In one exemplary embodiment, the DSBs are treated as a circular list, and checkpoints continue to be taken at scheduled intervals such that, during the steady state, each new checkpoint "overwrites" an old checkpoint so that the old version of the filesystem represented by the "overwritten" checkpoint is lost.

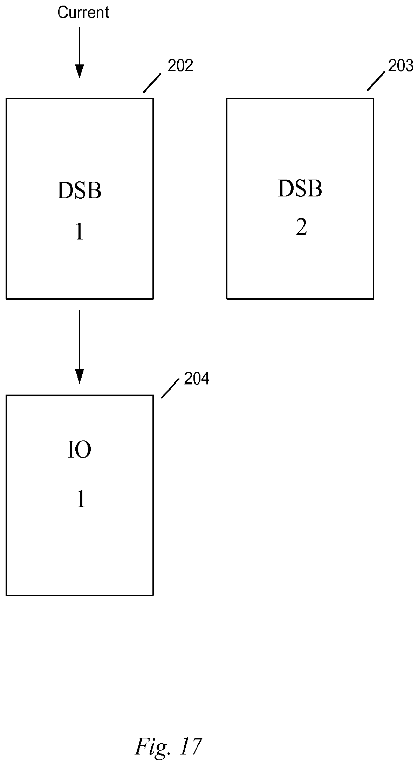

FIG. 17 is a schematic diagram showing various filesystem structures prior to the taking of a checkpoint, in accordance with an exemplary embodiment of the present invention. Specifically, two DSBs numbered 202 and 203 are shown. DSB 202 is associated with the current version of the filesystem and includes a pointer to the root node of the current version of the indirection object 204. DSB 203 is the next available DSB.

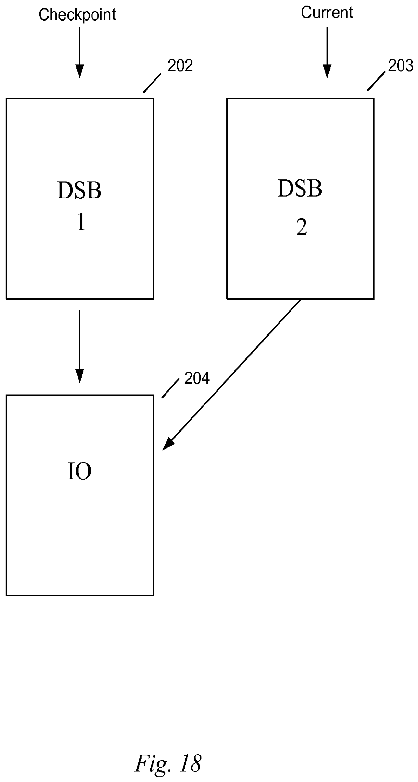

In order to create a checkpoint from the current version of the filesystem, the next DSB in the circular list (i.e., DSB 203 in this example) is initialized for the new checkpoint. Among other things, such initialization includes writing the next checkpoint number into DSB 203 and storing a pointer to the root node of indirection object 204 into DSB 203. FIG. 18 is a schematic diagram showing the various filesystem structures after a checkpoint is taken, in accordance with an exemplary embodiment of the present invention. At this point, DSB 202 represents the most recent checkpoint version of the filesystem, while DSB 203 represents the current (working) version of the filesystem.

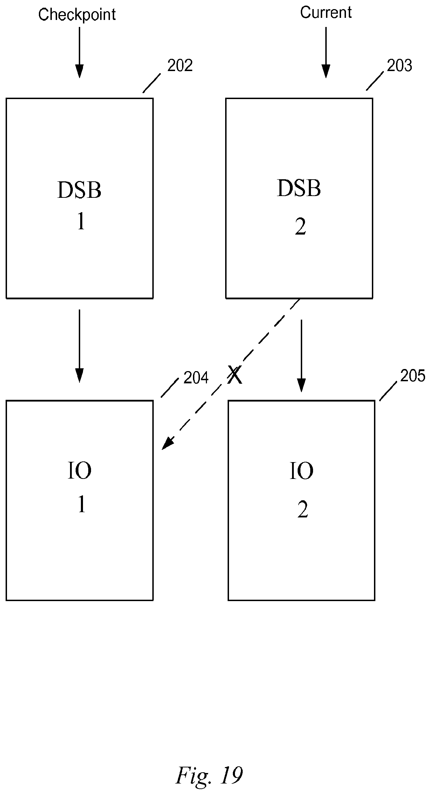

As discussed above, the current version of the filesystem may change as objects are created, modified, and deleted. Also, as discussed above, when the current version of the filesystem changes, a new version of the indirection object (having a new root node) is created. Consequently, when the current version of the indirection object changes after a checkpoint is taken as depicted in FIG. 18, such that a new indirection object root node is created, the DSB for the current filesystem version (i.e., DSB 203 in FIG. 18) is updated to point to the new indirection object root node rather than to the prior indirection object root node. FIG. 19 is a schematic diagram showing the various filesystem structures after modification of the indirection object, in accordance with an exemplary embodiment of the present invention. Here, DSB 202, which is associated with the checkpoint version of the filesystem, points to the checkpoint version of the indirection object 204, while DSB 203, which is associated with the current version of the filesystem, points to the root node of new indirection object 205.

As discussed above, checkpoints generally are taken at regular intervals such that multiple versions of the filesystem are maintained over time. At each checkpoint, the current (working) version of the filesystem moves to the next successive DSB in the circular list. When a particular checkpoint version is deleted from the system (e.g., because its DSB has been re-used), storage associated with the deleted checkpoint can be recovered in due course, for example, using a background task that identifies and frees storage that is no longer being used.

In one alternative embodiment, a particular DSB may be reused as the current DSB for successive checkpoints, with the other DSBs used to save checkpoint versions of the filesystem.

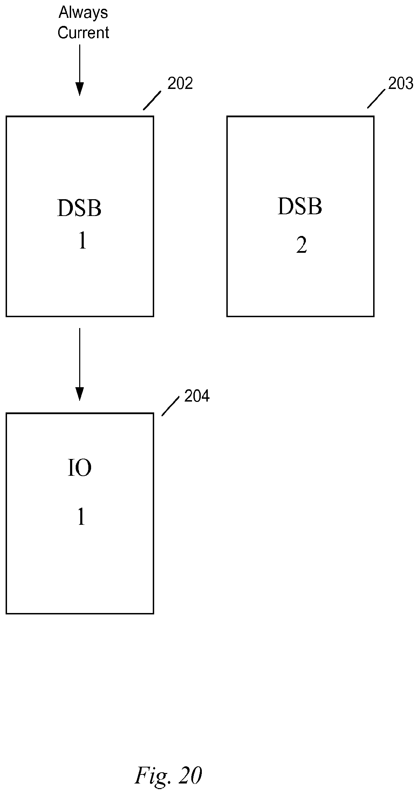

FIG. 20 is a schematic diagram showing various filesystem structures prior to the taking of a checkpoint, in accordance with an exemplary embodiment of the present invention. Specifically, two DSBs numbered 202 and 203 are shown. DSB 202 is associated with the current version of the filesystem and includes a pointer to the root node of the current version of the indirection object 204. DSB 203 is the next available DSB.

In order to create a checkpoint from the current version of the filesystem, the next DSB 203 is initialized for the new checkpoint. Among other things, such initialization includes writing the next checkpoint number into DSB 203 and storing a pointer to the root node of indirection object 204 into DSB 203. FIG. 18 is a schematic diagram showing the various filesystem structures after a checkpoint is taken, in accordance with an exemplary embodiment of the present invention. At this point, DSB 203 represents the most recent checkpoint version of the filesystem, while DSB 202 continues to represent the current (working) version of the filesystem.

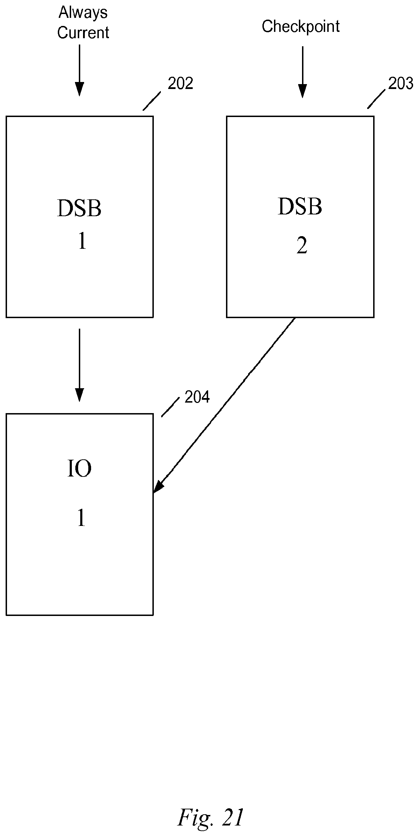

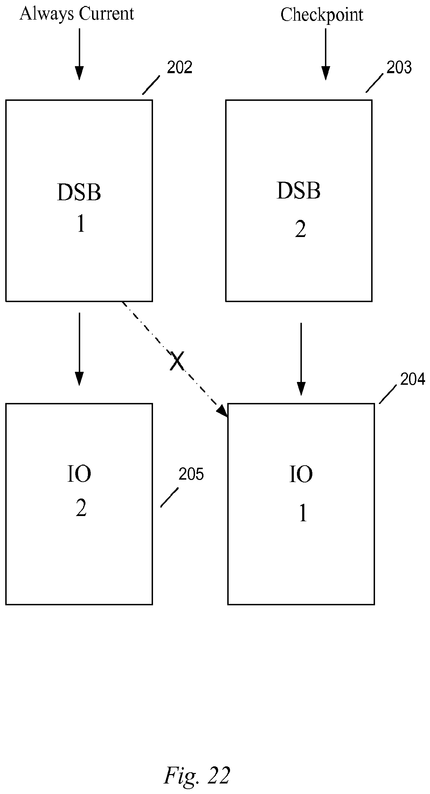

As discussed above, the current version of the filesystem may change as objects are created, modified, and deleted. Also, as discussed above, when the current version of the filesystem changes, a new version of the indirection object (having a new root node) is created. Consequently, when the current version of the indirection object changes after a checkpoint is taken as depicted in FIG. 21, such that a new indirection object root node is created, the DSB for the current filesystem version (i.e., DSB 202 in FIG. 21) is updated to point to the new indirection object root node rather than to the prior indirection object root node. FIG. 22 is a schematic diagram showing the various filesystem structures after modification of the indirection object, in accordance with an exemplary embodiment of the present invention. Here, DSB 203, which is associated with the checkpoint version of the filesystem, points to the checkpoint version of the indirection object 204, while DSB 202, which continues to be associated with the current version of the filesystem, points to the root node of new indirection object 205.

When a volume is mounted, the system will normally want to go back to the last valid checkpoint. There may be times, however, when the system or user may choose to revert to an earlier valid checkpoint. In embodiments of the present invention, the file server 9002 is capable of maintaining more that one checkpoint, so there may be multiple versions of the filesystem to which the filesystem can be reverted. Utilities can be provided to allow an operator to examine the contents of the various checkpoint versions in order to facilitate selection of a checkpoint version for reverting the filesystem.

Even though N checkpoints may be maintained in the system (where N is typically greater than two and may be user-configurable), a user-triggered mechanism may be provided for retaining a checkpoint such that it will remain valid and accessible (read-only) until the user chooses to delete it. A retained checkpoint is essentially a read-only version of the file system structure at a particular checkpoint. Multiple retained checkpoints can be taken, and mechanisms are included for deleting a selected retained checkpoint or reverting the file system to a selected retained checkpoint (for example, to return the file system to a known state following a catastrophe). As long as a retained checkpoint remains active, the nodes and data blocks that comprise the retained checkpoint cannot be modified or returned to free space. It should be noted that a node or data block can be a component of multiple retained checkpoints, and a particular node or data block cannot be returned to free space as long as the node or data block is a component of at least one retained checkpoint.

In an exemplary embodiment, taking a retained checkpoint involves, among other things, saving a copy of the corresponding DSB in free space on disk and storing a reference to the stored DSB copy in the retained checkpoint configuration object. As long as a retained checkpoint is stored in the filesystem, structures associated with the retained checkpoint cannot be deleted. This is true even if the checkpoint from which the retained checkpoint was taken has been overwritten. In an exemplary embodiment, the file server 9002 includes mechanisms to prevent structures associated with retained checkpoints from being deleted.

### VALIDATING OBJECTS IN A DATA STORAGE SYSTEM

In exemplary embodiments of the present invention, objects stored in the storage system (such as a file server system) may be protected by multiple levels of validation. Each chunk of an object may be associated with a chunk validator, and an object validator may be computed for the object based on the chunk validators. The object validator is stored in the storage system and may be used at various times to validate the object, for example, upon a startup of the storage system, upon taking a checkpoint or "snapshot" of the status of the storage system, or at other appropriate times.

More specifically, a chunk validator is computed and stored for each object chunk, and an object validator is computed from the chunk validators and stored in the data storage system. The object validator is computed using a reversible operation such that, when a particular chunk is modified, the object validator can be updated based on the old and new chunk validators for that chunk without having to perform a computation over multiple chunks, for example, by removing the old chunk validator (i.e., the chunk validator prior to the modification) from the object validator and combining the new chunk validator (i.e., computed following the modification) to the object validator. In this way, the object validator can be updated without having to compute the entire object validator from all chunk validators. The object validator may be stored within the object itself (e.g., within the root node) or may be stored elsewhere in the data storage system (e.g., within a dynamic superblock or within an object table).

In exemplary embodiments, the object validator is computed by summing the chunk validators of all object chunks. For example, if the chunk validators are 32-bit cyclic redundancy check (CRC) values, then the object validator may be the 64-bit sum of the 32-bit CRCs of all chunks. When a particular chunk is modified, the object validator can be updated by subtracting the old chunk validator (i.e., the chunk validator prior to the modification) from the object validator and adding the new chunk validator (i.e., computed following the modification) to the object validator, resulting in an object validator that is the sum of all chunk validators without having to actually sum all of the chunk validators.

Each chunk can be validated individually by computing a chunk verification validator for the chunk and comparing the chunk verification validator with the stored chunk validator for the chunk. In complex data storage systems, however, it may be insufficient to simply validate each chunk. Certain types of errors can cause chunks to be dropped from and/or added to objects, for example, by corruption of pointers in the object structure. Thus, even if every chunk referenced in an object structure is valid based on its chunk validator, it is still possible for the object as a whole to be invalid. Therefore, the object can be validated by computing an object verification validator using the chunk validators of all chunks referenced in the object structure and comparing the object verification validator with the stored object validator for the object.

### STORING OBJECTS

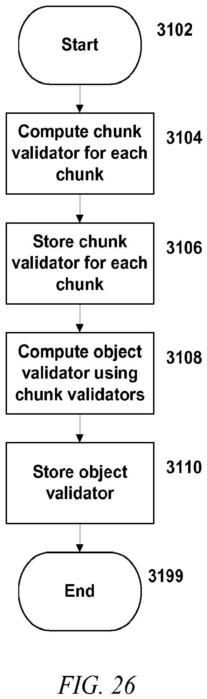

FIG. 26 is a logic flow diagram depicting general logic for storing an object in a storage system in accordance with various embodiments of this invention. The logic begins at execution block 3102. For each chunk associated with the object (e.g., via links in an object tree structure), a chunk validator is computed at execution block 3104, and the chunk validator is stored in the system (e.g., within the chunk itself) at execution block 3106. An object validator is then computed using the chunk validators at execution block 3108, and this object validator is stored in the system at execution block 3110. The logic ends at execution block 3199.

Chunk validators may be computed using any of a variety of mechanisms, including, but in no way limited to, checksum algorithms, cyclic redundancy check (CRC) algorithms, bitwise exclusive-OR (XOR) functions, hashing functions, parity checking functions, and error correcting codes, to name but a few. Different mechanisms have different properties that may be appropriate for different implementations and environments. For example, some mechanisms are computationally simple but may not provide significant protection (e.g., checksum or XOR), while others are more computationally intensive but may provide more protection (e.g., CRC or hashing functions). Some mechanisms may be well-suited for software implementations while others maybe well-suited for hardware implementations.

Similarly, object validators may be computed using any of a variety of mechanisms, although, in embodiments of the present invention, the mechanism used for computing object validators is reversible. Exemplary mechanisms for computing object validators include, but are in no way limited to, addition, multiplication, and bitwise XOR, which are reversible using subtraction, division, and bitwise XOR, respectively.

In specific embodiments of the present invention, the process of storing an object will be, for the most part, determined by the processes used to compute the chunk validators and the object validator. In an exemplary embodiment of the present invention, the chunk validators are computed using a 32-bit CRC algorithm, and the object validator for an object is computed by summing the chunk validators associated with the object chunks into a 64-bit sum. Such an embodiment provides a high level of error detection capability while still allowing the object validator to be updated following a structure change without requiring that all chunks (or all chunk validators) be accessed. Of course, if other types of validators are used, the process used for storing objects will vary accordingly.

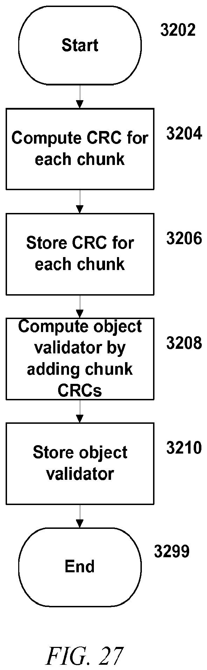

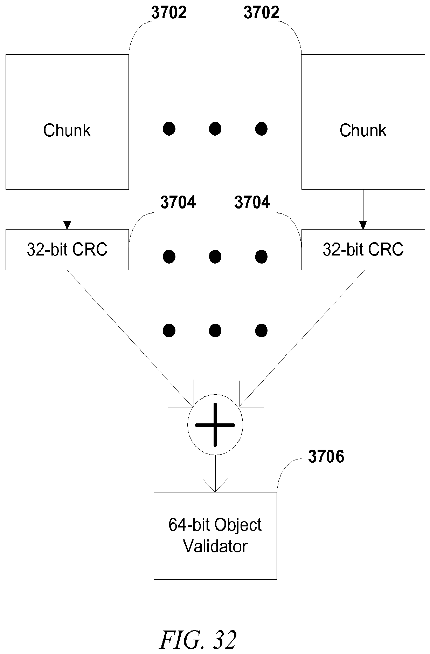

An exemplary process for storing an object in a storage system is now described with reference to FIG. 27 and FIG. 32. The logic begins at execution block 3202. For each chunk 3702 associated with the object, a chunk CRC 3704 is computed at execution block 3204, and the chunk CRCs 3704 are stored in the system at execution block 3206. CRCs 3704 are then added together to form a 64-bit object validator 3706 at execution block 3208. Object validator 3706 is then stored in the system at execution block 3210. The logic ends at execution block 3299.

### VALIDATING OBJECTS

In embodiments of the present invention, the validity of a stored object may be checked using the stored chunk validators and object validator. First, each chunk associated with the object (e.g., via links in an object tree structure) is validated by computing a chunk validator for the chunk and comparing the computed chunk validator with the stored chunk validator for that chunk. If any of the chunks are invalid, then the entire object is considered to be invalid, in which case an error recovery mechanism may be activated (e.g., generating an alert to an operator and/or reverting to an earlier version of the object or the entire filesystem). If all chunks are found to be valid individually, then the entire object is validated by computing a verification object validator using the chunk validators and comparing the verification object validator with the stored object validator. If the verification object validator matches the stored object validator, then the object is considered to be valid. If, however, the verification object validator does not match the stored object validator, then the object is considered to be invalid, in which case an error recovery mechanism may be activated (e.g., generating an alert to an operator and/or reverting to an earlier version of the object or the entire filesystem). An object might become invalid, for example, due to corruption of the object tree structure to omit a chunk from the object or add a chunk that is not really part of the object.

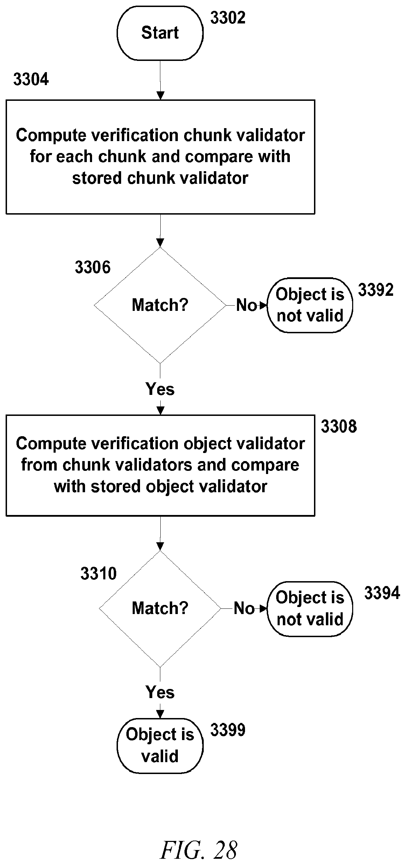

FIG. 28 is a logic flow diagram depicting general logic for verifying an object in accordance with various embodiments of the invention. The logic begins at execution block 3302. For each chunk associated with the object, a verification chunk validator is computed and compared with a stored chunk validator at execution block 3304. If any of the verification chunk validators does not match its respective stored chunk validator at execution block 3306, then the object is considered to be invalid at execution block 3392. If all of the chunks are valid, however, a verification object validator is computed using the chunk validators and compared with the stored object validator at execution block 3308. If the verification object validator does not match the stored object validator in execution block 3310, then the object is considered to be invalid at execution block 3394. If the verification object validator matches the stored object validator in execution block 3310, then the entire object is considered to be valid in execution block 3399.

In specific embodiments of the present invention, the process of validating an object will be, for the most part, determined by the process used to store the object. Thus, in an exemplary embodiment of the invention, chunks are validated by computing a 32-bit CRC and comparing the computed CRC with the stored CRC for the chunk, and the object is validated by computing a 64-bit sum of the 32-bit chunk CRCs and comparing the 64-bit sum with the stored 64-bit object validator. Of course, if other types of validators are used, the process for validating objects will vary accordingly.

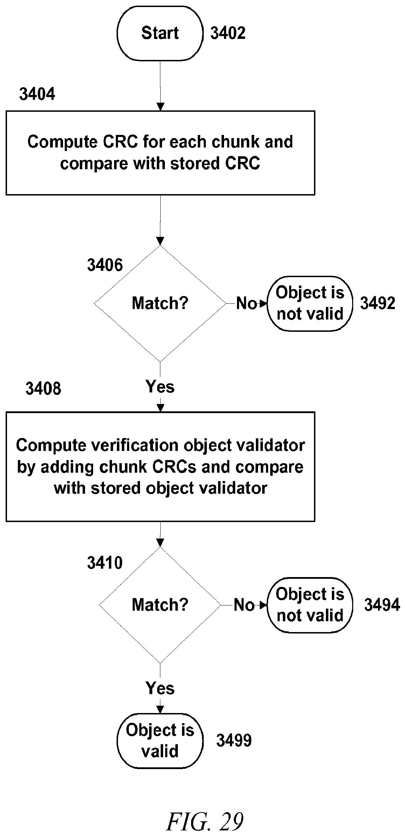

An exemplary process for validating an object is now described with reference to FIG. 29. For each chunk associated with the object, a chunk CRC is computed and compared with a corresponding stored CRC for the chunk at execution block 3404. If the computed CRC for any chunk does not match its corresponding stored CRC at execution block 3406, then the object is considered to be invalid at execution block 3492. If all of the chunks are valid, however, a 64-bit verification object validator is computed by summing the 32-bit chunk CRCs and is compared with the 64-bit stored object validator at execution block 3408. If the verification object validator does not match the stored object validator at execution block 3410, then the object is considered to be invalid at execution block 3494. If, however the verification object validator matches the stored object validator at execution block 3410, then the object is considered to be valid at execution block 3499.

### MODIFYING OBJECTS

In embodiments of the present invention, when an object is modified (e.g., a chunk is added, deleted, or modified), the object validator for the object is updated. For example, if a new chunk is added to the object, then a chunk validator is computed and stored for the new chunk, and an updated object validator is computed for the object by adding the chunk validator to the saved object validator. If an existing chunk is removed from the object, then an updated object validator is computed for the object by subtracting from the saved object validator the chunk validator associated with the removed chunk. If an existing chunk is modified, then a new chunk validator is computed for the chunk, and an updated object validator is computed for the object by removing the old chunk validator from, and adding the new chunk validator to, the saved object validator.

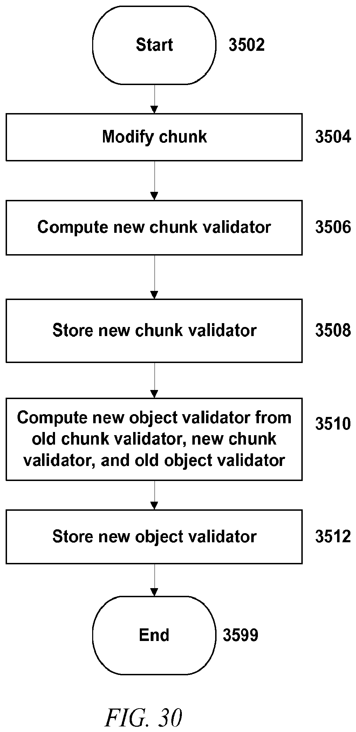

FIG. 30 is a logic flow diagram depicting general logic updating an object validator when a chunk is modified in accordance with various embodiments of this invention. The logic begins at execution block 3502. When a chunk is modified at execution block 3504, a new chunk validator is computed for the chunk at execution block 3506, and the new chunk validator is stored at execution block 3508. An updated object validator is then computed using the old chunk validator, the new chunk validator, and the saved object validator at execution block 3510. The updated object validator is stored for the object at execution block 3512. The logic ends at execution block 3599.

In specific embodiments of the present invention, the process of updating an object validator will be, for the most part, determined by the process used to store the object. Thus, in an exemplary embodiment of the invention, the object validator is updated by removing an old 32-bit CRC from the saved 64-bit object validator and/or adding a new 32-bit CRC to the saved 64-bit object validator. Of course, if other types of validators are used, the process used for updating object validators will vary accordingly.

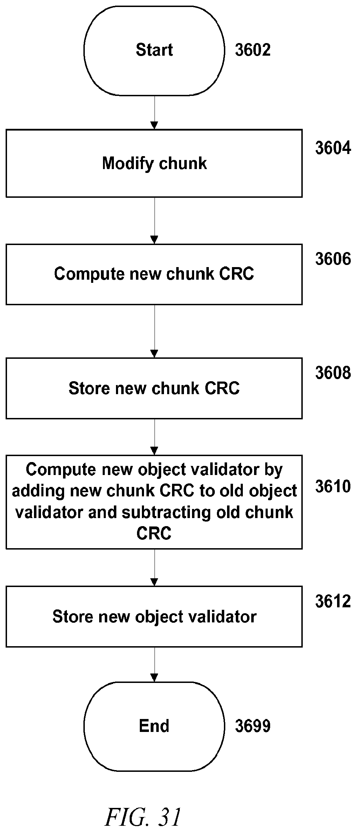

An exemplary process for updating an object validator when upon modification of a chunk is now described with reference to FIG. 31. The logic begins at execution block 3602. When a chunk is modified at execution block 3604, a new 32-bit CRC is computed for the chunk at execution block 3606. The new 32-bit CRC is stored for the chunk at execution block 3608. A new 64-bit object validator is computed for the object by adding the new 32-bit CRC to the saved object validator and subtracting the old 32-bit CRC for the chunk from the saved object validator at execution block 3610. The new object validator is stored at execution block 3612. The logic ends at execution block 3699.

It should be noted that the process for updating the object validator is similar when adding or removing a chunk. Specifically, upon adding a new chunk to the object, a 32-bit CRC is computed and stored for the new chunk, and the 32-bit CRC is added to the saved 64-bit object validator. On the other hand, upon removing a chunk from the object, the old 32-bit CRC for the chunk is subtracted from the saved 64-bit object validator.

It should also be noted a chunk may be "modified" by either modifying the existing chunk or by creating a modified version of the chunk and updating the object structure to point to the modified chunk instead of the chunk it replaces.

### EXEMPLARY FILESYSTEM EMBODIMENTS

As discussed above, the object validator for an object may be stored in any of various locations within a storage system. In an exemplary embodiment, each object is implemented as a tree structure having a root node, so the object validator may be stored in the object root node.

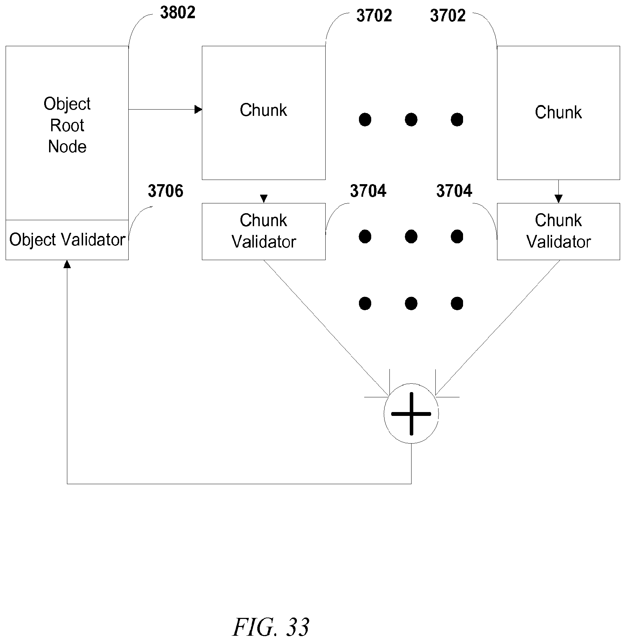

FIG. 33 is a schematic block diagram showing storage of the object validator in the object root node in accordance with an exemplary embodiment of the present invention. A chunk validator 3704 is computed for each chunk 3702, and the chunk validators 3704 are combined (e.g., by summing) to form the object validator 3706, which is stored in the object root node 3802.

Also in an exemplary embodiment, an entire filesystem containing multiple objects is also implemented as a tree structure having a special root node referred to as a dynamic superblock (DSB) as well as various other objects accessible directly or indirectly from the DSB.

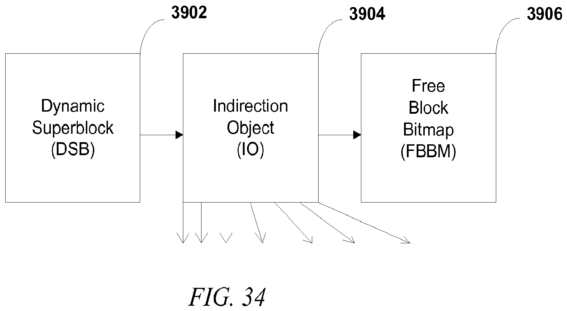

FIG. 34 is a schematic block diagram showing the general format of a filesystem in accordance with an exemplary embodiment of the present invention. In this example, the filesystem includes a dynamic superblock (DSB) 3902, an indirection object 3904, and various other filesystem objects and structures including, among others, a free block bitmap 3906. The DSB 3902 is the root of the filesystem, and, in this example, is stored at a fixed location so it can easily be located (certain embodiments include multiple DSBs so that different versions of the filesystem may be maintained). The indirection object 3904, the free block bitmap 3906 and other filesystem objects are stored using separate tree structures, each having its own root node and other elements. These objects may be stored at varying locations in the storage system. Thus, the DSB 3902 includes a pointer to the indirection object 3904, and the indirection object 3904 in turn includes pointers to other filesystem objects including the free block bitmap 3906.

Because the indirection object 3904, the free block bitmap 3906, and other filesystem objects are "objects" that have tree structures with root nodes, the object validators for such objects may be stored in the respective root nodes as discussed above. Alternatively, the object validators for certain objects may be stored directly in the DSB 3902 or in other critical filesystem objects such as, for example, the indirection object 3904.

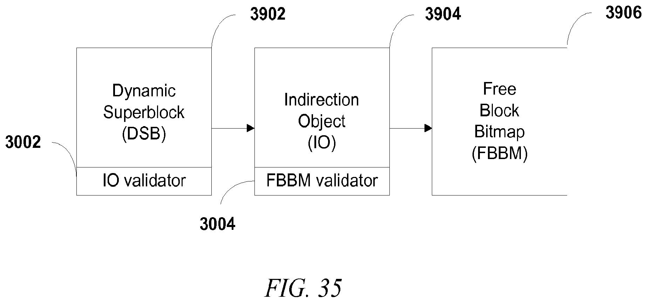

FIG. 35 is a schematic block diagram showing the object validator for the indirection object 3904 stored in the DSB 3902 and the object validator for the free block bitmap 3906 stored in the indirection object 3904, in accordance with an exemplary embodiment of the present invention.

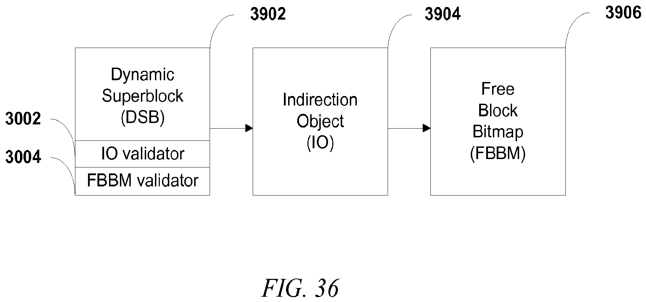

FIG. 36 is a schematic block diagram showing the object validators for both the indirection object 3904 and the free block bitmap 3906 stored in the DSB 3902, in accordance with an exemplary embodiment of the present invention.

### ALTERNATE EMBODIMENTS

Object validators could certainly be provided for every object in a data storage system, but it is envisioned that, in practice, object validators may be limited to a subset of the objects in the system, particularly those that are critical to system operation. Thus, the decision as to which objects are to be protected using object validators is an implementational one that may very on a case-by-case basis. Similarly, the decision as to when to validate objects using the object validators is an implementational one that may vary on a case-by-case basis. For example, objects may be validated upon system startup, upon taking a checkpoint or "snapshot," on a scheduled basis (e.g., every day at a certain time), or at other appropriate times. Some considerations as to which objects to protect using object validators and when to validate objects using object validators include the importance of the object to system operation; the system overhead of creating, maintaining, and checking validators and resultant impact on system performance; and impact on storage space/speed, to name but a few. Using object validators only for system-critical components is likely to be a reasonable trade-off between system reliability and performance impact.

Exemplary embodiments of the present invention are described above with reference to an object validator that is the sum of the chunk validators so that an obsolete chunk validator can be removed from the object validator using subtraction. It should be noted, however, that the present invention is not limited to the use of addition/subtraction for the object validator. Other techniques, including reversible operations such as multiplication/division or bitwise exclusive-OR (XOR), may alternatively be used for the object validator. Thus, for example, an object validator may be computed by multiplying the chunk validators, and a particular chunk validator may be removed from the resulting object validator using a division operation. Similarly, an object validator may be computed by combining the chunk validators using an XOR function, and a particular chunk validator may be removed from the resulting object validator using an XOR operation. Other techniques may become apparent to the skilled artisan based on the teachings of this patent application, and all such techniques are intended to fall within the scope of this patent application.

It should be noted that an object may be composed of different types of chunks (e.g., data blocks, tree nodes, etc.), and the chunk validators for the different types of chunks may be combined into a single object validator as discussed above. Furthermore, it should be noted that different types of chunk validators may be computed for different types of chunks (e.g., 32-bit CRC for data blocks, 16-bit checksum for tree nodes), and the different types of chunk validators may also be combined into a single object validator as discussed above.

It should be noted that embodiments of the present invention are not limited to the specific types of storage systems, filesystems, objects, and data structures described above for exemplary embodiments. Embodiments of the present invention may be employed in various types of data storage systems including, but not limited to, file servers, web servers, and RAID systems, to name but a few.

It should be noted that the term "server" is used herein to describe a device that may be used in a communication system and should not be construed to limit the present invention to any particular type of device. Thus, embodiments of the present invention may be implemented in a client, server, computer, switch, or other type of communication device.

The present invention may be embodied in many different forms, including, but in no way limited to, computer program logic for use with a processor (e.g., a microprocessor, microcontroller, digital signal processor, or general purpose computer), programmable logic for use with a programmable logic device (e.g., a Field Programmable Gate Array (FPGA) or other PLD), discrete components, integrated circuitry (e.g., an Application Specific Integrated Circuit (ASIC)), or any other means including any combination thereof.

Computer program logic implementing all or part of the functionality previously described herein may be embodied in various forms, including, but in no way limited to, a source code form, a computer executable form, and various intermediate forms (e.g., forms generated by an assembler, compiler, linker, or locator). Source code may include a series of computer program instructions implemented in an appropriate programming language (e.g., an object code, an assembly language, or a high-level language such as Fortran, C, C++, JAVA, or HTML) for use with various operating systems or operating environments. The source code may define and use various data structures and communication messages. The source code may be in a computer executable form (e.g., via an interpreter), or the source code may be converted (e.g., via a translator, assembler, or compiler) into a computer executable form.

The computer program may be fixed in any form (e.g., source code form, computer executable form, or an intermediate form) either permanently or transitorily in a tangible storage medium, such as a semiconductor memory device (e.g., a RAM, ROM, PROM, EEPROM, or Flash-Programmable RAM), a magnetic memory device (e.g., a diskette or fixed disk), an optical memory device (e.g., a CD-ROM), a PC card (e.g., PCMCIA card), or other memory device. The computer program may be fixed in any form in a signal that is transmittable to a computer using any of various communication technologies, including, but in no way limited to, analog technologies, digital technologies, optical technologies, wireless technologies (e.g., Bluetooth), networking technologies, and internetworking technologies. The computer program may be distributed in any form as a removable storage medium with accompanying printed or electronic documentation (e.g., shrink wrapped software), preloaded with a computer system (e.g., on system ROM or fixed disk), or distributed from a server or electronic bulletin board over the communication system (e.g., the Internet or World Wide Web).

Hardware logic (including programmable logic for use with a programmable logic device) implementing all or part of the functionality previously described herein may be designed using traditional manual methods, or may be designed, captured, simulated, or documented electronically using various tools, such as Computer Aided Design (CAD), a hardware description language (e.g., VHDL or AHDL), or a PLD programming language (e.g., PALASM, ABEL, or CUPL).

Programmable logic may be fixed either permanently or transitorily in a tangible storage medium, such as a semiconductor memory device (e.g., a RAM, ROM, PROM, EEPROM, or Flash-Programmable RAM), a magnetic memory device (e.g., a diskette or fixed disk), an optical memory device (e.g., a CD-ROM), or other memory device. The programmable logic may be fixed in a signal that is transmittable to a computer using any of various communication technologies, including, but in no way limited to, analog technologies, digital technologies, optical technologies, wireless technologies (e.g., Bluetooth), networking technologies, and internetworking technologies. The programmable logic may be distributed as a removable storage medium with accompanying printed or electronic documentation (e.g., shrink wrapped software), preloaded with a computer system (e.g., on system ROM or fixed disk), or distributed from a server or electronic bulletin board over the communication system (e.g., the Internet or World Wide Web).

The present invention may be embodied in other specific forms within the scope of the appended claims. The described embodiments are to be considered in all respects only as illustrative and not restrictive.

## Claims

1. A computer program product comprising computer-readable program instructions which, when running on or loaded into a data storage system, cause the data storage system to execute a method for managing a file system,
the method comprising:
- maintaining a plurality of superblocks (202, 203), each superblock being associated with one of plurality of checkpoints and representing a version of the file system including a current version of the file system represented by a first superblock (202) of the plurality of superblocks and at least one checkpoint version of the file system represented by at least one second superblock (203) of the plurality of superblocks;
- maintaining a plurality of indirection objects (204, 205), each indirection object comprising a respective tree structure including a root node (302) of the respective indirection object; and
- managing a plurality of objects (206, 208) other than the indirection objects (204, 205), each of the other objects comprising a respective tree structure including a root node (2302) of the respective other object;
wherein each of the plurality of superblocks (202, 203) includes a reference to the root node (302) of at least one of the indirection objects (204, 205) such that each of the indirection objects is referenced by at least one of the plurality of superblocks (202, 203), and each of the indirection objects includes a reference to the root node (2302) of at least one of the other objects (206, 208) such that each of the other objects is referenced by at least one of the indirection objects (204, 205);
wherein, by using an indirection object referenced by the first superblock (202) and at least one indirection object (204) referenced by the at least one second superblock (203), the method comprises maintaining the current version of the file system and retaining the at least one checkpoint version of the file system;
wherein each superblock stores a respective checkpoint number being associated with the respective superblock and, for each of the objects including the indirection object, the root node (302; 2302) of the respective object includes a checkpoint number identifying a respective checkpoint in which the respective object was last modified; and
wherein, for each of the objects including the indirection object, the root node (302; 2302) of the respective object includes a pointer to an older root node version of the respective root node if there is one.

2. A computer program product according to claim 1, wherein
maintaining the plurality of superblocks comprises maintaining the superblocks (202, 203) at fixed locations within the data storage system.

3. A computer program product according to claim 1, wherein
the plurality of superblocks (202, 203) are logically arranged as a circular list, and said second superblock (203) is a next successive superblock in the circular list following said first superblock (202).

4. A computer program product according to claim 1, wherein
maintaining the current version of the filesystem and retaining the at least one checkpoint version of the file system comprises at least one of:
- initially including in said second superblock a reference to the indirection object referenced by said first superblock; and upon modification of the indirection object referenced by said first superblock: creating a new version of said indirection object; and including in said second superblock a reference to said new version, and
- creating a new version of said indirection object upon retaining the copy of the current file system and including in said second superblock a reference to said new version.

5. A computer program product according to claim 1, wherein:
the number of superblocks (202, 203) is fixed; or
the number of superblocks (202, 203) is user-configurable.

6. A computer program product according to claim 1, wherein
the indirection objects are implemented as pseudo-files that map each of a plurality of object numbers to a sector address of a root node associated with a corresponding object (206, 208) other than the indirection objects (204, 205).

7. Apparatus for managing a file system, comprising:
at least one storage device; and
a storage processor in communication with the at least one storage device, the storage processor being configured to execute:
- maintaining a plurality of superblocks (202, 203), each superblock being associated with one of plurality of checkpoints and representing a version of the file system including a current version of the file system represented by a first superblock (202) of the plurality of superblocks and at least one checkpoint version of the file system represented by at least one second superblock (203) of the plurality of superblocks;
- maintaining a plurality of indirection objects (204, 205), each indirection object comprising a respective tree structure including a root node (302) of the respective indirection object; and
- managing a plurality of objects (206, 208) other than the indirection objects (204, 205), each of the other objects comprising a respective tree structure including a root node (2302) of the respective other object;
wherein each of the plurality of superblocks (202, 203) includes a reference to the root node (302) of at least one of the indirection objects (204, 205) such that each of the indirection objects is referenced by at least one of the plurality of superblocks (202, 203), and each of the indirection objects includes a reference to the root node (2302) of at least one of the other objects (206, 208) such that each of the other objects is referenced by at least one of the indirection objects (204, 205); and
wherein, by using an indirection object referenced by the first superblock (202) and at least one indirection object (204) referenced by the at least one second superblock (203), the method comprises maintaining the current version of the file system and retaining the at least one checkpoint version of the file system;
wherein each superblock stores a respective checkpoint number being associated with the respective superblock and, for each of the objects including the indirection object, the root node (302; 2302) of the respective object includes a checkpoint number identifying a respective checkpoint in which the respective object was last modified; and
wherein, for each of the objects including the indirection object, the root node (302; 2302) of the respective object includes a pointer to an older root node version of the respective root node if there is one.

8. Apparatus according to claim 7, wherein
the storage processor is configured to maintain the superblocks (202, 203) at fixed locations within the data storage system.

9. Apparatus according to claim 7, wherein:
the superblocks (202, 203) are logically arranged as a circular list, and
said second superblock (203) is a next successive superblock in the circular list following said first superblock (202).

10. Apparatus according to claim 7, wherein
the storage processor is configured to execute at least one of:
- initially including in said second superblock a reference to the indirection object referenced by said first superblock and, upon modification of the indirection object referenced by said first superblock, creating a new version of said indirection object and including in said second superblock a reference to said new version; and
- creating a new version of said indirection object upon retaining the copy of the current file system and including in said second superblock a reference to said new version.

11. Apparatus according to claim 7, wherein:
the number of superblocks (202, 203) is fixed; or
the number of suparblocks (202, 203) is user-configurable.

12. Apparatus according to claim 7, wherein
the indirection objects are implemented as pseudo files that map each of a plurality of object numbers to a sector address of a root node associated with a corresponding object (206, 208) other than the indirection objects (204, 205).

13. Method for managing a file system in a data storage system, the method comprising:
- maintaining a plurality of superblocks (202, 203), each superblock being associated with one of plurality of checkpoints and representing a version of the file system including a current version of the file system represented by a first superblock (202) of the plurality of superblocks and at least one checkpoint version of the file system represented by at least one second superblock (203) of the plurality of superblocks;
- maintaining a plurality of indirection objects (204, 205), each indirection object comprising a respective tree structure including a root node (302) of the respective indirection object; and
- managing a plurality of objects (206, 208) other than the indirection objects (204, 205), each of the other objects comprising a respective tree structure including a root node (2302) of the respective other object;
wherein each of the plurality ef superblocks (202, 203) includes a reference to the root node (302) of at least one of the indirection objects (204, 205) such that each of the indirection objects is referenced by at least one of the plurality of superblocks (202, 203), and each of the indirection objects includes a reference to the root node (2302) of at least one of the other objects (206, 208) such that each of the other objects is referenced by at least one of the indirection objects (204, 205); and
wherein, by using an indirection object referenced by the first superblock (202) and at least one indirection object (204) referenced by the at least one second superblock (203), the method comprises maintaining the current version of the file system and retaining the at least one checkpoint version of the file system;
wherein each superblock stores a respective checkpoint number being associated with the respective superblock and, for each of the objects including the indirection object, the root node (302; 2302) of the respective object includes a checkpoint number identifying a respective checkpoint in which the respective object was last modified; and
wherein, for each of the objects including the indirection object, the root node (302; 2302) of the respective object includes a pointer to an older root node version of the respective root node if there is one.

## Patentansprüche

1. Computerprogrammprodukt, das computerlesbare Programmanweisungen umfasst, die dann, wenn sie auf einem Datenspeichersystem ablaufen oder in ein Datenspeichersystem geladen werden, bewirken, dass das Datenspeichersystem ein Verfahren zum Managen eines Dateisystems ausführt,
wobei das Verfahren umfasst:
- Pflegen von mehreren Superblöcken (202, 203), wobei jeder Superblock einem von mehreren Prüfpunkten zugeordnet ist und eine Version des Dateisystems repräsentiert, das eine aktuelle Version des Dateisystems, die durch einen ersten Superblock (202) aus den mehreren Superblöcken repräsentiert ist, und wenigstens eine Prüfpunktversion des Dateisystems, das durch wenigstens einen zweiten Superblock (203) aus den mehreren Superblöcken repräsentiert ist, enthält;
- Pflegen von mehreren Indirektionsobjekten (204, 205), wobei jedes Indirektionsobjekt eine jeweilige Baumstruktur umfasst, die einen Wurzelknoten (302) des jeweiligen Indirektionsobjekts enthält; und
- Managen von mehreren Objekten (206, 208), die nicht die Indirektionsobjekte (204, 205) sind, wobei jedes der anderen Objekte eine jeweilige Baumstruktur umfasst, die einen Wurzelknoten (2302) des jeweiligen anderen Objekts enthält;
wobei jeder aus den mehreren Superblöcken (202, 203) eine Referenz auf den Wurzelknoten (302) wenigstens eines aus den Indirektionsobjekten (204, 205) enthält, so dass jedes der Indirektionsobjekte durch wenigstens einen aus den mehreren Superblöcken (202, 203) referenziert ist, und jedes der Indirektionsobjekte eine Referenz auf den Wurzelknoten (2302) wenigstens eines aus den anderen Objekten (206, 208) enthält, so dass jedes der anderen Objekte (206, 208) durch wenigstens eines der Indirektionsobjekte (204, 205) referenziert ist;
wobei das Verfahren durch Verwenden eines Indirektionsobjekts, das durch den ersten Superblock (202) referenziert ist, und wenigstens eines Indirektionsobjekts, das durch den wenigstens einen zweiten Superblock (203) referenziert ist, Pflegen der aktuellen Version des Dateisystems und Halten wenigstens einer Prüfpunktversion des Dateisystems umfasst;
wobei jeder Superblock eine jeweilige Prüfpunktnummer speichert, die dem jeweiligen Superblock zugeordnet ist, und für jedes der Objekte, die das Indirektionsobjekt enthalten, der Wurzelknoten (302; 2302) des jeweiligen Objekts eine Prüfpunktnummer enthält, die einen jeweiligen Prüfpunkt identifiziert, in dem das jeweilige Objekt zuletzt modifiziert wurde; und
wobei für jedes der Objekte, die das Indirektionsobjekt enthalten, der Wurzelknoten (302; 2302) des jeweiligen Objekts einen Zeiger zu einer älteren Wurzelknotenversion des jeweiligen Wurzelknotens, falls vorhanden, enthält.

2. Computerprogrammprodukt nach Anspruch 1, wobei
Pflegen der mehreren Superblöcke Pflegen der Superblöcke (202, 203) an festen Orten innerhalb des Datenspeichersystems umfasst.

3. Computerprogrammprodukt nach Anspruch 1, wobei
die mehreren Superblöcke (202, 203) logisch als eine Ringliste angeordnet sind und der zweite Superblock (203) ein nächstfolgender Superblock in der Ringliste ist, der dem ersten Superblock (202) folgt.

4. Computerprogrammprodukt nach Anspruch 1, wobei
Pflegen der aktuellen Version des Dateisystems und Halten der wenigstens einen Prüfpunktversion des Dateisystem wenigstens eines aus dem Folgenden umfasst:
- initiales Aufnehmen in den zweiten Superblock einer Referenz auf das Indirektionsobjekt, das durch den ersten Superblock referenziert ist; und bei der Modifikation des Indirektionsobjekts, das durch den ersten Superblock referenziert ist: Erzeugen einer neuen Version des Indirektionsobjekts; und Aufnehmen in den zweiten Superblock einer Referenz auf die neue Version, und
- Erzeugen einer neuen Version des Indirektionsobjekts bei Halten der Kopie des aktuellen Dateisystems und Aufnehmen in den zweiten Superblock einer Referenz auf die neue Version.

5. Computerprogrammprodukt nach Anspruch 1, wobei:
die Anzahl von Superblöcken (202, 203) fest ist; oder
die Anzahl von Superblöcken (202, 203) durch den Anwender konfigurierbar ist.

6. Computerprogrammprodukt nach Anspruch 1, wobei
die Indirektionsobjekte als Pseudo-Dateien implementiert sind, die jede aus den mehreren Objektnummern auf eine Sektoradresse eines Wurzelknotens abbilden, der einem entsprechenden Objekt (206, 208), das nicht die Indirektionsobjekte (204, 205) ist, zugeordnet ist.

7. Vorrichtung zum Managen eines Dateisystems, die umfasst:
wenigstens eine Speichervorrichtung; und
einen Speicherprozessor in Kommunikation mit der wenigstens eine Speichervorrichtung, wobei der Speicherprozessor konfiguriert ist, Folgendes auszuführen:
- Pflegen von mehreren Superblöcken (202, 203), wobei jeder Superblock einem von mehreren Prüfpunkten zugeordnet ist und eine Version des Dateisystems repräsentiert, das eine aktuelle Version des Dateisystems, die durch einen ersten Superblock (202) aus den mehreren Superblöcken repräsentiert ist, und wenigstens eine Prüfpunktversion des Dateisystems, das durch wenigstens einen zweiten Superblock (203) aus den mehreren Superblöcken repräsentiert ist, enthält;
- Pflegen von mehreren Indirektionsobjekten (204, 205), wobei jedes Indirektionsobjekt eine jeweilige Baumstruktur umfasst, die einen Wurzelknoten (302) des jeweiligen Indirektionsobjekts enthält; und
- Managen von mehreren Objekten (206, 208), die nicht die Indirektionsobjekte (244, 205) sind, wobei jedes der anderen Objekte eine jeweilige Baumstruktur umfasst, die einen Wurzelknoten (2302) des jeweiligen anderen Objekts enthält;
wobei jeder aus den mehreren Superblöcken (202, 203) eine Referenz auf den Wurzelknoten (302) wenigstens eines aus den Indirektionsobjekten (204, 205) enthält, so dass jedes der Indirektionsobjekte durch wenigstens einen aus den mehreren Superblöcken (202, 203) referenziert ist, und jedes der Indirektionsobjekte eine Referenz auf den Wurzelknoten (2302) wenigstens eines aus den anderen Objekten (206, 208) enthält, so dass jedes der anderen Objekte (206, 208) durch wenigstens eines der Indirektionsobjekte (204, 205) referenziert ist; und
wobei das Verfahren durch Verwenden eines Indirektionsobjekts, das durch den ersten Superblock (202) referenziert ist, und wenigstens eines Indirektionsobjekts, das durch den wenigstens einen zweiten Superblock (203) referenziert ist, Pflegen der aktuellen Version des Dateisystems und Halten wenigstens einer Prüfpunktversion des Dateisystems umfasst;
wobei jeder Superblock eine jeweilige Prüfpunktnummer speichert, die dem jeweiligen Superblock zugeordnet ist, und für jedes der Objekte, die das Indirektionsobjekt enthalten, der Wurzelknoten (302; 2302) des jeweiligen Objekts eine Prüfpunktnummer enthält, die einen jeweiligen Prüfpunkt identifiziert, in dem das jeweilige Objekt zuletzt modifiziert wurde; und
wobei für jedes der Objekte, die das Indirektionsobjekt enthalten, der Wurzelknoten (302; 2302) des jeweiligen Objekts einen Zeiger zu einer älteren Wurzelknotenversion des jeweiligen Wurzelknotens, falls vorhanden, enthält.

8. Vorrichtung nach Anspruch 7, wobei
der Speicherprozessor konfiguriert ist, die Superblöcke (202, 203) an festen Orten innerhalb des Datenspeichersystems zu pflegen.

9. Vorrichtung nach Anspruch 7, wobei:
die Superblöcke (202, 203) logisch als eine Ringliste angeordnet sind und
der zweite Superblock (203) ein nächstfolgender Superblock in der Ringliste ist, der dem ersten Superblock (202) folgt.

10. Vorrichtung nach Anspruch 7, wobei
der Speicherprozessor konfiguriert ist, wenigstens eines aus dem Folgenden auszuführen:
- initiales Aufnehmen in den zweiten Superblock einer Referenz auf das Indirektionsobjekt, das durch den ersten Superblock referenziert ist, und bei der Modifikation des Indirektionsobjekts, das durch den ersten Superblock referenziert ist, Erzeugen einer neuen Version des Indirektionsobjekts und Aufnehmen in den zweiten Superblock einer Referenz auf die neue Version; und
- Erzeugen einer neuen Version des Indirektionsobjekts bei dem Halten der Kopie des aktuellen Dateisystems und Aufnehmen in den zweiten Superblock einer Referenz auf die neue Version.

11. Vorrichtung nach Anspruch 7, wobei:
die Anzahl von Superblöcken (202, 203) fest ist; oder
die Anzahl von Superblöcken (202, 203) durch den Anwender konfigurierbar ist.

12. Vorrichtung nach Anspruch 7, wobei
die Indirektionsobjekte als Pseudo-Dateien implementiert sind, die jede aus den mehreren Objektnummern auf eine Sektoradresse eines Wurzelknotens abbilden, der einem entsprechenden Objekt (206, 208), das nicht die Indirektionsobjekte (204, 205) ist, zugeordnet ist.

13. Verfahren zum Managen eines Dateisystems in einem Datenspeichersystem, wobei das Verfahren umfasst:
- Pflegen von mehreren Superblöcken (202, 203), wobei jeder Superblock einem von mehreren Prüfpunkten zugeordnet ist und eine Version des Dateisystems repräsentiert, das eine aktuelle Version des Dateisystems, die durch einen ersten Superblock (202) aus den mehreren Superblöcken repräsentiert ist, und wenigstens eine Prüfpunktversion des Dateisystems, das durch wenigstens einen zweiten Superblock (203) aus den mehreren Superblöcken repräsentiert ist, enthält;
- Pflegen von mehreren Indirektionsobjekten (204, 205), wobei jedes Indirektionsobjekt eine jeweilige Baumstruktur umfasst, die einen Wurzelknoten (302) des jeweiligen Indirektionsobjekts enthält; und
- Managen von mehreren Objekten (206, 208), die nicht die Indirektionsobjekte (244, 205) sind, wobei jedes der anderen Objekte eine jeweilige Baumstruktur umfasst, die einen Wurzelknoten (2302) des jeweiligen anderen Objekts enthält;
wobei jeder aus den mehreren Superblöcken (202, 203) eine Referenz auf den Wurzelknoten (302) wenigstens eines aus den Indirektionsobjekten (204, 205) enthält, so dass jedes der Indirektionsobjekte durch wenigstens einen aus den mehreren Superblöcken (202, 203) referenziert ist, und jedes der Indirektionsobjekte eine Referenz auf den Wurzelknoten (2302) wenigstens eines aus den anderen Objekten (206, 208) enthält, so dass jedes der anderen Objekte (206, 208) durch wenigstens eines der Indirektionsobjekte (204, 205) referenziert ist; und
wobei das Verfahren durch Verwenden eines Indirektionsobjekts, das durch den ersten Superblock (202) referenziert ist, und wenigstens eines Indirektionsobjekts, das durch den wenigstens einen zweiten Superblock (203) referenziert ist, Pflegen der aktuellen Version des Dateisystems und Halten wenigstens einer Prüfpunktversion des Dateisystems umfasst;
wobei jeder Superblock eine jeweilige Prüfpunktnummer speichert, die dem jeweiligen Superblock zugeordnet ist, und für jedes der Objekte, die das Indirektionsobjekt enthalten, der Wurzelknoten (302; 2302) des jeweiligen Objekts eine Prüfpunktnummer enthält, die einen jeweiligen Prüfpunkt identifiziert, in dem das jeweilige Objekt zuletzt modifiziert wurde; und
wobei für jedes der Objekte, die das Indirektionsobjekt enthalten, der Wurzelknoten (302; 2302) des jeweiligen Objekts einen Zeiger zu einer älteren Wurzelknotenversion des jeweiligen Wurzelknotens, falls vorhanden, enthält.

## Revendications

1. - Produit programme d'ordinateur comprenant des instructions de programme lisibles par ordinateur qui, lorsqu'elles s'exécutent sur ou sont chargées dans un système de stockage de données, amènent le système de stockage de données à exécuter un procédé pour gérer un système de fichier,
le procédé comprenant :
- le maintien d'une pluralité de superblocs (202, 203), chaque superbloc étant associé à l'un d'une pluralité de points de contrôle et représentant une version du système de fichier comprenant une version actuelle du système de fichier représentée par un premier superbloc (202) de la pluralité de superblocs et au moins une version de point de contrôle du système de fichier représentée par au moins un second superbloc (203) de la pluralité de superblocs ;
- le maintien d'une pluralité d'objets d'indirection (204, 205), chaque objet d'indirection comprenant une structure d'arbre respective comprenant un noeud racine (302) de l'objet d'indirection respectif ; et
- la gestion d'une pluralité d'objets (206, 208) autres que les objets d'indirection (204, 205), chacun des autres objets comprenant une structure d'arbre respective comprenant un noeud racine (2302) de l'autre objet respectif ;
dans lequel chacun de la pluralité de superblocs (202, 203) comprend une référence au noeud racine (302) d'au moins l'un des objets d'indirection (204, 205) de telle sorte que chacun des objets d'indirection est référencé par au moins l'un de la pluralité de superblocs (202, 203), et chacun des objets d'indirection comprend une référence au noeud racine (2302) d'au moins l'un des autres objets (206, 208) de telle sorte que chacun des autres objets est référencé par au moins l'un des objets d'indirection (204, 205) ;
dans lequel, par utilisation d'un objet d'indirection référencé par le premier superbloc (202) et d'au moins un objet d'indirection (204) référencé par l'au moins un second superbloc (203), le procédé comprend le maintien de la version actuelle du système de fichier et la retenue de l'au moins une version de point de contrôle du système de fichier ;
dans lequel chaque superbloc stocke un numéro de point de contrôle respectif qui est associé au superbloc respectif et, pour chacun des objets comprenant l'objet d'indirection, le noeud racine (302 ; 2302) de l'objet respectif comprend un numéro de point de contrôle identifiant un point de contrôle respectif dans lequel l'objet respectif a été modifié en dernier ; et
dans lequel, pour chacun des objets comprenant l'objet d'indirection, le noeud racine (302 ; 2302) de l'objet respectif comprend un pointeur vers une version de noeud racine plus ancienne du noeud racine respectif s'il y en a une.

2. - Produit programme d'ordinateur selon la revendication 1, dans lequel
le maintien de la pluralité de superblocs comprend le maintien des superblocs (202, 203) à des emplacements fixes dans le système de stockage de données.

3. - Produit programme d'ordinateur selon la revendication 1, dans lequel
la pluralité de superblocs (202, 203) sont disposés de manière logique comme une liste circulaire, et ledit second superbloc (203) est un superbloc successif d'après dans la liste circulaire suivant le premier superbloc (202).

4. - Produit programme d'ordinateur selon la revendication 1, dans lequel
le maintien de la version actuelle du système de fichier et la retenue de l'au moins une version de point de contrôle du système de fichier comprend au moins un parmi :
- inclure initialement dans ledit second superbloc une référence à l'objet d'indirection référencé par ledit premier superbloc ; et après modification de l'objet d'indirection référencé par ledit premier superbloc : créer une nouvelle version dudit objet d'indirection ; et inclure dans ledit second superbloc une référence à ladite nouvelle version, et
- créer une nouvelle version dudit objet d'indirection après retenue de la copie du système de fichier actuel et inclure dans ledit second superbloc une référence à ladite nouvelle version.

5. - Produit programme d'ordinateur selon la revendication 1, dans lequel :
le nombre de superblocs (202, 203) est fixe ; ou
le nombre de superblocs (202, 203) est configurable par l'utilisateur.

6. - Produit programme d'ordinateur selon la revendication 1, dans lequel
les objets d'indirection sont mis en oeuvre comme des pseudo-fichiers qui mappent chacun d'une pluralité de numéros d'objet à une adresse de secteur d'un noeud racine associé à un objet correspondant (206, 208) autre que les objets, d'indirection (204, 205).

7. - Appareil pour gérer un système de fichier, comprenant :
au moins un dispositif de stockage ; et
un processeur de stockage en communication avec l'au moins un dispositif de stockage, le processeur de stockage étant configuré pour exécuter :
- le maintien d'une pluralité de superblocs (202, 203), chaque superbloc étant associé à l'un d'une pluralité de points de contrôle et représentant une version du système de fichier comprenant une version actuelle du système de fichier représentée par un premier superbloc (202) de la pluralité de superblocs et au moins une version de point de contrôle du système de fichier représentée par au moins un second superbloc (203) de la pluralité de superblocs ;
- le maintien d'une pluralité d'objets d'indirection (204, 205), chaque objet d'indirection comprenant une structure d'arbre respective comprenant un noeud racine (302) de l'objet d'indirection respectif ; et
- la gestion d'une pluralité d'objets (206, 208) autres que les objets d'indirection (204, 205), chacun des autres objets comprenant une structure d'arbre respective comprenant un noeud racine (2302) de l'autre objet respectif ;
dans lequel chacun de la pluralité de superblocs (202, 203) comprend une référence au noeud racine (302) d'au moins l'un des objets d'indirection (204, 205) de telle sorte que chacun des objets d'indirection est référencé par au moins l'un de la pluralité de superblocs (202, 203), et chacun des objets d'indirection comprend une référence au noeud racine (2302) d'au moins l'un des autres objets (206, 208) de telle sorte que chacun des autres objets est référencé par au moins l'un des objets d'indirection (204, 205) ; et
dans lequel, par utilisation d'un objet d'indirection référencé par le premier superbloc (202) et d'au moins un objet d'indirection (204) référencé par l'au moins un second superbloc (203), le procédé comprend le maintien de la version actuelle du système de fichier et la retenue de l'au moins une version de point de contrôle du système de fichier ;
dans lequel chaque superbloc stocke un numéro de point de contrôle respectif qui est associé au superbloc respectif et, pour chacun des objets comprenant l'objet d'indirection, le noeud racine (302 ; 2302) de l'objet respectif comprend un numéro de point de contrôle identifiant un point de contrôle respectif dans lequel l'objet respectif a été modifié en dernier ; et
dans lequel, pour chacun des objets comprenant l'objet d'indirection, le noeud racine (302 ; 2302) de l'objet respectif comprend un pointeur vers une version de noeud racine plus ancienne du noeud racine respectif s'il y en a une.

8. - Appareil selon la revendication 7, dans lequel
le processeur de stockage est configuré pour maintenir les superblocs (202, 203) à des emplacements fixes dans le système de stockage de données.

9. - Appareil selon la revendication 7, dans lequel :
les superblocs (202, 203) sont disposés de manière logique comme une liste circulaire, et
ledit second superbloc (203) est un superbloc successif d'après dans la liste circulaire suivant ledit premier superbloc (202).

10. - Appareil selon la revendication 7, dans lequel
le processeur de stockage est configuré pour exécuter au moins un parmi :
- inclure initialement dans ledit second superbloc une référence à l'objet d'indirection référencé par ledit premier superbloc et, après modification de l'objet d'indirection référencé par ledit premier superbloc, créer une nouvelle version dudit objet d'indirection et inclure dans ledit second superbloc une référence à ladite nouvelle version ; et
- créer une nouvelle version dudit objet d'indirection après retenue de la copie du système de fichier actuel et inclure dans ledit second superbloc une référence à ladite nouvelle version.

11. - Appareil selon la revendication 7, dans lequel :
le nombre de superblocs (202, 203) est fixe ; ou
le nombre de superblocs (202, 203) est configurable par l'utilisateur.

12. - Appareil selon la revendication 7, dans lequel
les objets d'indirection sont mis en oeuvre comme des pseudo-fichiers qui mappent chacun d'une pluralité de numéros d'objet à une adresse de secteur d'un noeud racine associé à un objet correspondant (206, 208) autre que les objets d'indirection (204, 205).

13. - Procédé pour gérer un système de fichier dans un système de stockage de données, le procédé comprenant :
- le maintien d'une pluralité de superblocs (202, 203), chaque superbloc étant associé à l'un d'une pluralité de points de contrôle et représentant une version du système de fichier comprenant une version actuelle du système de fichier représentée par un premier superbloc (202) de la pluralité de superblocs et au moins une version de point de contrôle du système de fichier représentée par au moins un second superbloc (203) de la pluralité de superblocs ;
- le maintien d'une pluralité d'objets d'indirection (204, 205), chaque objet d'indirection comprenant une structure d'arbre respective comprenant un noeud racine (302) de l'objet d'indirection respectif ; et
- la gestion d'une pluralité d'objets (206, 208) autres que les objets d'indirection (204, 205), chacun des autres objets comprenant une structure d'arbre respective comprenant un noeud racine (2302) de l'autre objet respectif ;
dans lequel chacun de la pluralité de superblocs (202, 203) comprend une référence au noeud racine (302) d'au moins l'un des objets d'indirection (204, 205) de telle sorte que chacun des objets d'indirection est référencé par au moins l'un de la pluralité de superblocs (202, 203), et chacun des objets d'indirection comprend une référence au noeud racine (2302) d'au moins l'un des autres objets (206, 208) de telle sorte que chacun des autres- objets est référencé par au moins l'un des objets d'indirection (204, 205) ; et
dans lequel, par utilisation d'un objet d'indirection référencé par le premier superbloc (202) et d'au moins un objet d'indirection (204) référencé par l'au moins un second superbloc (203), le procédé comprend le maintien de la version actuelle du système de fichier et la retenue de l'au moins une version de point de contrôle du système de fichier ;
dans lequel chaque superbloc stocke un numéro de point de contrôle respectif qui est associé au superbloc respectif et, pour chacun des objets comprenant l'objet d'indirection, le noeud racine (302 ; 2302) de l'objet respectif comprend un numéro de point de contrôle identifiant un point de contrôle respectif dans lequel l'objet respectif a été modifié en dernier ; et
dans lequel, pour chacun des objets comprenant l'objet d'indirection, le noeud racine (302 ; 2302) de l'objet respectif comprend un pointeur vers une version de noeud racine plus ancienne du noeud racine respectif s'il y en a une.
